# EUROPÄISCHE PATENTSCHRIFT

(11) **EP 2 502 696 B1**
(45) Veröffentlichungstag und Bekanntmachung des Hinweises auf die Patenterteilung: **12.02.2014**
(21) Anmeldenummer: 11159116.0
(22) Anmeldetag: 22.03.2011
(51) Int. Cl.: B23H 7/20, G05B 19/408

(54) **Verfahren und Vorrichtung zur digitalen Datenübertragung**
Method and device for digital data transfer
Procédé et dispositif de transmission de données numérique

(43) Veröffentlichungstag der Anmeldung: 26.09.2012
(73) Patentinhaber: Agie Charmilles SA, 6616 Losone (CH)
(72) Erfinder: Bühler, Ernst, 6616, Losone (CH); Knaak, Reto, 6612, Ascona (CH); D'Amario, Rino, 6806, Sigirino (CH)
(74) Vertreter: De Colle, Piergiacomo

(56) Entgegenhaltungen:
- EP-A1- 0 660 209

## Beschreibung

Die Erfindung betrifft ein Verfahren und eine Vorrichtung zur digitalen Datenübertragung über ein Datenkabel mit mehreren verdrillten Leiterpaaren in Werkzeugmaschinen und ähnlichen elektronischen Systemen.

### Hintergrund der Erfindung

Für eine (schnelle) digitale Datenübertragung über kurze Strecken, d.h. Strecken von wenigen Metern bzw. Zentimetern, werden häufig Leiter in paralleler Anordnung und in unzähligen Varianten eingesetzt.

Eine Anwendung betrifft beispielsweise parallele Busse (DatenübertragungsStrecken) auf Mutterplatinen von Personal Computern (PC), mit denen mehrere Tochterplatinen parallel verbunden werden können. Solche Busse haben meist eine Länge von weniger als 300mm und können über 100 parallele Leiter aufweisen, z.B. ISA-Bus, PC104-Bus, PCI-Bus, aber auch zahlreiche proprietäre Busse ohne verbindliche Normen.

Ein weiteres Beispiel betrifft die Datenübertragung über Distanzen von mehreren Metern. Zwischen Geräten wie PC und Drucker oder Messgeräten werden im Stand der Technik mehradrige abgeschirmte Kabel für den schnellen, parallelen Datentransport verwendet. Typische Beispiele sind: der PC-Parallel-Port, Centronics/IEEE-1284, der IEEE-488/IEC-625-Instrumentenbus, aber auch alle industriellen Steuersysteme mit vieladrigen Flachkabeln.

Gemeinsam ist diesen parallelen Datenübertragungen der hohe Aufwand im Sende- und Empfangsteil und die hohe Anzahl benötigter paralleler Leitungen für das Übertragungskabel. Typisch für parallele Leiter ist deren erhebliche Störanfälligkeit durch elektromagnetische Felder, das Übersprechen und Laufzeitdifferenzen zwischen den parallelen Leitern. Besonders störend ist in manchen Fällen die Unflexibilität hinsichtlich des Ausbaugrads betreffend die Datenbusbreite, den Adressbereich und die Übertragungsrate.

Aus diesen Gründen fand die serielle Datenübertragung eine weite Verbreitung. Bei drahtloser Übertragung über Funk- oder Lichtwellen aber auch bei drahtgebundener Übertragung über Fernmeldeleitungen kommt bei vielen Anwendungsfällen praktisch nur das serielle Prinzip in Frage.

Viele serielle Datenübertragungs-Protokolle, wie PCI-Express, ETHERNET, EtherCAT, Powerlink, USB, oder industrielle Feldbusse wie etwa Profibus, Device-Net oder CANopen haben sich in den jeweiligen Anwendungsgebieten etabliert, und wurden in entsprechenden Normen veröffentlicht.

Die serielle Datenübertragung hat den digitalen Datenverkehr vereinfacht und verbilligt. Verschiedene Codier- und Prüfverfahren garantieren sichere und robuste Verbindungen. Die Möglichkeit mancher Codierverfahren, wie bspw. auch das unten erwähnte Manchester-Codierverfahren, das Taktsignal aus dem Datenstrom zu extrahieren, löst die Laufzeitprobleme über beliebige Übertragungswege und Distanzen.

Eine hohe Flexibilität für die Anzahl von Busteilnehmern, die Datenbreite, die Adressbereiche, die Übertragungsmedia, die Übertragungsdistanz und die Übertragungsrichtung ist für viele dieser Verfahren gegeben.

Ein besonderes Problem ergibt sich jedoch bei der Anwendung von seriellen digitalen Datenübertragungen über kurze Strecken in Werkzeugmaschinen und ähnlichen elektronischen Systemen, wenn zufällig auftretende Ereignisse in beliebigen Baugruppen der Maschine (nahezu) ohne Zeitverzug behandelt werden müssen.

Es sind zwar Lösungen bekannt, wie etwa EtherCat und Powerlink, um verschiedene Module, wie beispielsweise Antriebsachsen, zyklisch miteinander zu synchronisieren. Für die stochastischen Vorgänge sind aber keine brauchbaren Ansätze bekannt.

Die Europäische Patentschrift EP 1 749 609 B1, deren Inhalt durch Bezugnahme vollständig hierin aufgenommen wird, offenbart eine konsequente Modularisierung der Baugruppen in Werkzeugmaschinen, insbesondere bei Funkenerosionsmaschinen. Die Module werden, ausgehend von einem zentralen Kommunikations-Knotenpunkt, über ETHERNET-ähnliche Datenverbindungen sternförmig vernetzt und bis zu einer Leistung von 50W auch mit Gleichspannung über die Datenkabel versorgt. Die Stromversorgung geschieht bspw. entsprechend dem Standard Power over ETHERNET, oder kurz: PoE, der ähnlich zu der IEEE802.3af- Norm ist.

Der Kommunikations-Knotenpunkt weist zusätzlich mindestens eine normgerechte ETHERNET-Datenverbindung nach IEEE802.3 auf, über welche beliebige Fernverbindungen zur Außenwelt ermöglicht werden.

Eine solche Werkzeugmaschine benötigt im Endeffekt keinen Elektroschrank mehr und ist jederzeit erweiterbar oder modifizierbar. Ferndiagnosen, Konfigurationen und Software-Aufdatierungen können bequem über das Internet vorgenommen werden. Die Module werden direkt an ihrem Wirkungsort in der Werkzeugmaschine eingebaut, um Verluste, die bei der Leistungsübertragung entstehen, möglichst niedrig zu halten.

In der EP 1 749 609 B1 werden als nähere Angaben zur Ausgestaltung der internen, ETHERNET-ähnlichen Verbindungen LINK drei Prioritäten für die Datenverarbeitung und Datenübertragung vorgeschlagen:
Priorität TOP: Parallelverarbeitung nur innerhalb eines Moduls,
Priorität SECOND: Zwischen Modulen, über den Netzwerkknoten und bevorzugt parallele Datenverarbeitung,
Priorität THIRD: Zwischen Modulen und dem Netzwerkknoten sowie zu externen, übergeordneten Systemen ist die sequentielle Datenverarbeitung bevorzugt.

lm Weiteren sind, wie eingangs erwähnt, ETHERNET-Derivate wie EtherCAT, Powerlink, Profinet und Modbus TCP/lP für Echtzeitanwendungen bekannt geworden. Dabei handelt es sich um besondere Vorkehrungen im Sendeverfahren, um eine maximal zulässige Latenzzeit für ein deterministisches (vorhersehbares) Verhalten zu garantieren. Dazu wird zum Beispiel ein Zeitstempel nach IEEE1588 in den Datenpaketen mit gesendet, um eine genaue zeitliche Synchronisation mehrerer Busteilnehmer zu ermöglichen.

Allen diesen bekannten Lösungen ist aber gemeinsam nachteilig, dass sie nicht unmittelbar auf zeitlich zufällige Vorgänge reagieren können. Es muss immer die Sendung eines Datenpaketes eingeleitet oder abgewartet werden, um eine Information zu übertragen, und das Ereignis muss jeweils auch auf die lokalen Taktraten synchronisiert werden.

Das hat nun beispielsweise für eine EtherCAT-Verbindung, mit einem Cat.5-Kabel nach der Norm EIAITIA-568 und der maximalen Bandbreite von 100MHz, eine Zeitverzögerung von mindestens 10µs und erheblichen Jitter (zeitliche Unschärfe) zur Folge. Da normalerweise ein Sensor und ein Aktor am Vorgang beteiligt sind, die ebenfalls eine gewisse Zeitverzögerung der Datenverarbeitung zur Folge haben, kann sich diese Zeitverzögerung, bis auf ein stochastisches Ereignis reagiert werden kann, bspw. auf über 20µs verdoppeln.

Die schnelleren Cat.6-Kabel nach der Norm EN50288, mit maximal 250MHz Bandbreite, oder Cat.6a-Verbindungen mit 500MHz für Gigabit-Ethernet nach IEEE802.3an, könnten diese Zeitverzögerung bis zur Reaktion auf ein stochastisches Ereignis zwar reduzieren, erhöhen dafür aber die Systemkosten und die Verlustleistungen.

Selbst bei einer Bandbreite von 500MHz und einer parallelen Übertragung über vier Leiterpaare, hätte man für den Sensor-Aktor-Fall noch mit Verzögerungszeiten bis zur Reaktion auf ein zufälliges Ereignis von etwa 2µs zu rechnen.

Sobald in einem System zufällige Vorgänge bzw. Ereignisse auftreten, welche typischerweise in weniger als etwa 100ns bearbeitet werden müssen, sind bspw. die oben beschriebenen synchronen, seriellen Datenübertragungen generell überfordert.

Funkenerosionsmaschinen sind von diesem Nachteil besonders betroffen, da viele prozessbezogene Vorgänge ein rein stochastisches Verhalten aufweisen, wie etwa die Zündverzögerungszeit der Bearbeitungsimpulse oder Prozess-Störungen, welche während eines Bearbeitungsimpulses erfasst und durch Sofortmaßnahmen eliminiert werden sollten. Manche Funkenerosions-Prozesse basieren auf schwachen, sogenannten Vor- oder Sondierimpulsen, welche den Zustand der Funkenstrecke abtasten. Je nach Resultat der Analyse wird ein Bearbeitungsimpuls oder verschiedene andere Impulse, wie etwa zum Aufbrechen von Mikrokurzschlüssen oder zum Reinigen über Schockwellen, freigegeben. Diese Freigabe muss aber in weniger als etwa 100ns ausgeführt werden, da sonst das Verfahren sinnlos wird, weil die gemessenen Eigenschaften der Funkenstrecke schon nicht mehr aktuell sind (bspw. nach 100 ns).

Ähnliche Probleme treten bei hochdynamischen Servoachsen mit Linearmotoren oder Piezoantrieben auf. Solche Systeme werden immer häufiger eingesetzt, um Prozesse nach ständig erfassten, stochastischen Störgrößen zu stabilisieren. Beispiele dafür sind: Antriebsachsen in Funkenerosionsmaschinen, das Unrunddrehen in Drehmaschinen, die aktive Dämpfung von externen Erschütterungen bei Hochpräzisionsmaschinen und die aktive Unterdrückung von Rattermarken, welche durch die Vibrationen von Schneidwerkzeugen in spangebenden Werkzeugmaschinen verursacht werden.

Stellgeschwindigkeiten bis 10m/s sind für diese Art Antriebe keine Seltenheit. Dies bedeutet aber, dass sich in diesem Fall die Position in 100ns um 1µm ändert. Für eine Mikrometer-Genauigkeit ergibt sich somit eine Grenze von etwa 100ns für die Verzögerungszeit bis zum Ergreifen von Gegenmaßnahmen bei Auftreten stochastischer Ereignisse.

Für eine Verzögerungszeit von 2µs, die wie oben erwähnt bei dem Sensor-Aktor-Fall aufträte, hätte man entsprechend mit Fehlern bis 20µm zu rechnen.

### Aufgabe der Erfindung:

Gegenüber dem Stand der Technik liegt der Erfindung die Aufgabe zugrunde, ein serielles Verfahren und eine Vorrichtung für die digitale Datenübertragung derart weiterzubilden, dass stochastische Ereignisse bei geringem Aufwand und geringem Energieverbrauch analysiert werden und bei geringem Energieverbrauch schnell übertragen werden können.

### Zusammenfassung der Erfindung:

Nach einem ersten Aspekt stellt die Erfindung ein Verfahren zur schnellen digitalen Datenübertragung von stochastischen Ereignissen in einer Werkzeugmaschine über ein Datenkabel mit mehreren verdrillten Leiterpaaren bereit, wovon mindestens ein Leiterpaar für einen seriellen Datentransfer vorgesehen ist. Ein weiteres Leiterpaar wird zur Übermittlung von stochastischen Ereignissen vorgesehen. Ein stochastisches Ereignis wird durch einen taktfrei übermittelten Einzelimpuls signalisiert, wobei der Einzelimpuls ein positiver Impuls oder ein negativer Impuls sein kann, und wobei ein positiver Impuls ein erstes stochastisches Ereignis, ein negativer Impuls ein zweites stochastisches Ereignis und das Fehlen eines Einzelimpulses kein Ereignis signalisiert.

Nach einem zweiten Aspekt stellt die Erfindung eine Vorrichtung zur digitalen Datenübertragung von stochastischen Ereignissen in einer Werkzeugmaschine über ein Datenkabel mit mehreren verdrillten Leiterpaaren bereit, wovon mindestens ein Leiterpaar für einen seriellen Datentransfer vorgesehen ist. Mindestens ein weiteres Leiterpaar ist für die Übermittlung stochastischer Ereignisse vorgesehen. Wenigstens auf einer Seite des Datenkabels ist eine Sendeeinrichtung und auf einer gegenüberliegenden Seite des Datenkabels eine Empfangseinrichtung vorgesehen und angekoppelt, welche an zugehörige Logikschaltungen angeschlossen sind. Die wenigstens eine Sendeeinrichtung ist für das Signalisieren stochastischer Ereignisse so ausgelegt, dass sie Einzelimpulse taktfrei übermittelt, wobei ein Einzefimpuls ein positiver Impuls oder ein negativer Impuls sein kann, und wobei ein positiver Impuls ein erstes stochastisches Ereignis, ein negativer Impuls ein zweites stochastisches Ereignis und das Fehlen eines Einzelimpulses kein Ereignis signalisiert, und die wenigstens eine Empfangseinrichtung für den Empfang der Einzelimpulse so ausgelegt ist, dass sie die drei Zustände positiver Impuls", "negativer Impuls" und "kein Ereignis" detektieren kann.

Nach einem dritten Aspekt stellt die vorliegende Erfindung eine Funkenerosionsmaschine bereit, die umfasst: einen zentralen Knoten, mehrere Module, die zur Steuerung der Funkenerosionsmaschine ausgelegt und vorgesehen sind, und wenigstens ein Datenkabel. Das Datenkabel verbindet wenigstens ein Modul mit dem zentralen Knoten. Die Funkenerosionsmaschine weist eine Vorrichtung nach dem zweiten Aspekt auf und/oder ist dazu eingerichtet, ein Verfahren nach dem ersten Aspekt auszuführen.

Weitere Aspekte der vorliegenden Erfindung sind in den rückbezogenen Ansprüche, den Zeichnungen und der folgenden Beschreibung dargelegt.

### Kurzbeschreibung der Zeichnungen:

Nachfolgend werden unter Bezugnahme auf die beiliegenden Zeichnungen bevorzugte Ausführungsformen der Erfindung näher erläutert.
Es zeigen:
- Fig. 1: Eine typische modulare Bauweise und modulare Verkabelung der Elektronik am Beispiel einer Funkenerosionsmaschine.
- Fig. 2: Einen zentralen Knotenpunkt mit ETHERNET-Datenverbindung und konfigurierbaren, seriellen Datenkanälen LINK, bekannt aus EP 1 749 609 B1.
- Fig. 3: Die genormte Belegung des bekannten ETHERNET-Cat.5-Kabels für Datenraten bis 100Mbit/s.
- Fig.4: Eine Ausführungsform mit einer erfindungsgemäßen Erweiterung und Belegung eines Cat,5-Kabels mit zwei bidirektionalen Übertragungskanälen für zufällige Ereignisse.
- Fig. 5: Eine Ausführungsform mit einer Einzelimpuls-Codierung von zwei diskreten Ereignissen für die Steuerung und/oder die Positionsmeldung von Antriebsachsen.
- Fig. 6: Eine Ausführungsform mit einer Einzelimpuls-Codierung von zwei diskreten Ereignissen für die Erfassung des Zustandes der Funkenstrecke von Funkenerosionsmaschinen.
- Fig. 7: Eine Ausführungsform mit einer modularen, seriellen Datenübertragung LINK zwischen dem Knotenpunkt und einem Modul.
- Fig. 8: Eine Ausführungsform mit einer schnellen und sicheren Übertragung von zufälligen Ereignissen.
- Fig. 9: Eine weitere Ausführungsform mit einer schnellen und sicheren Übertragung von zufälligen Ereignissen.

### Beschreibung der Ausführungsformen

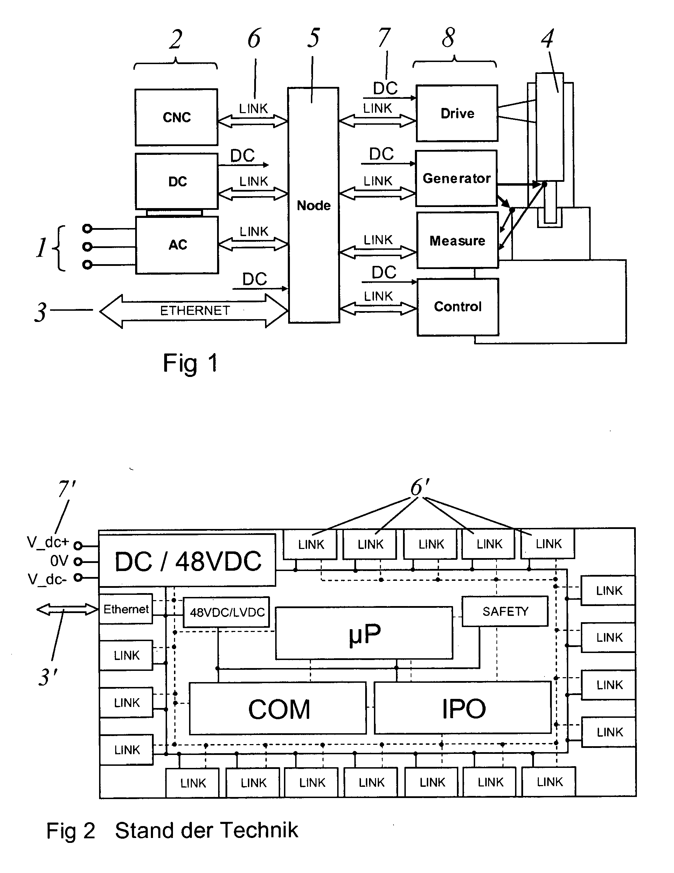

Fig. 1 zeigt eine Ausführungsform mit einer typischen modularen Bauweise und modularen Verkabelung der Elektronik am Beispiel einer Funkenerosionsmaschine 4.

Die Funkenerosionsmaschine 4 wird über einen Wechselstrom Netzeingang 1 mit Energie versorgt. ln einer Konsole oder Elektroschrank sind die Module 2 für den Wechselstromeingang AC, Gleichspannungsregler DC und Numerische Steuerung CNC untergebracht.

Ein Knotenpunkt 5 (Node) ist als Zentrale für den maschineninternen Datenverkehr über sternförmig angeordnete, serielle Datenverbindungen 6 (LINK) vorgesehen. Über die als "LINK" bezeichneten seriellen Datenverbindungen 6 können angeschlossene Module 8 mit einer Gleichspannung von typischerweise 48 VDC, bis zu einer Leistung von je etwa 50W direkt versorgt werden. Wie oben erwähnt, geschieht die Stromversorgung dabei bspw. über Power over Ethernet (PoE) Standard, der ähnlich zur lEEE802.3af-Norm ist.

Die Module 8 sind dabei bspw. Module, die zum Antreiben eines Motors ("Drive"), zum Erzeugen von Bearbeitungsimpulsen ("Generator"), zum Messen ("Measure") und zum Steuern ausgelegt sind.

Für in die Funkenerosionsmaschine 4 eingebaute Module 8 höherer Leistung (Drive, Generator und Control) sind Gleichspannungskabel 7 ("DC") mit einer Gleichspannung von beispielsweise +/-280VDC vorgesehen. Die Gleichspannungskabel 7 gehen vom Gleichspannungsregler DC aus und sind ebenfalls sternförmig über den Knotenpunkt 5 mit den entsprechend zu versorgenden Modulen 8 verbunden. Diese Verbindung gestattet einen ungehinderten Energieaustausch zwischen den angeschlossenen Modulen 8. Ein Modul 8 für Messzwecke (Measure) benötigt typischerweise kein Gleichspannungskabel 7, sondern es wird über PoE mit elektrischer Energie versorgt.

Außerdem ist ein genormter ETHERNET-Steueranschluss 3 vorgesehen, der die Kommunikation mit der Außenwelt, bspw. mit einem Firmennetzwerk (z.B. einem LAN oder WLAN) oder sogar über Internet ermöglicht.

Die maschineninterne Kommunikation über die Datenverbindungen 6 (LINK) kann bei manchen Ausführungsformen stark vereinfacht erfolgen, da immer nur ein Busteilnehmer angeschlossen ist und somit weder ein Adressiervorgang noch ein komplexes Datenpaket-Management erforderlich ist. Sogenannte Plug & Play ldentifikationsverfahren ermöglichen eine flexible Anbindung beliebiger Module 8, was bei manchen Ausführungsformen wichtig für eine kundenspezifische Auslegung oder spätere Erweiterungen sein kann.

Die Datenverbindung 6 (LINK) ist ein Ausgangspunkt der vorliegenden Erfindung. Dessen Funktionsweise wird im Folgenden näher erläutert.

Fig. 2 zeigt einen zentralen Knotenpunkt mit einer ETHERNET-Datenverbindung 3' und vielen baugleichen, aber konfigurierbaren, seriellen Datenverbindungen 6' (LINK), wie es bspw. aus der EP 1 749 609 B1 bekannt ist. Der zentrale Knotenpunkt 5 kann dabei bei manchen Ausführungsformen dem in Fig. 2 gezeigten und in EP 1 749 609 B1 offenbarten Knotenpunkt entsprechen.

Bei diesem Knotenpunkt stellt ein Gleichspannungsanschluss 7' über den Gleichspannungskonverter DC/48V die Grundversorgung des gesamten Systems mit einer typischen Spannung von 48 VDC sicher. Diese Spannung speist alle Datenverbindungen LINK und Ethernet, sowie einen Spannungsregler 48VDC/LVDC, welcher die niedrigeren Spannungen für die elektronischen Komponenten µP, COM, IPO und SAFETY bereitstellt.

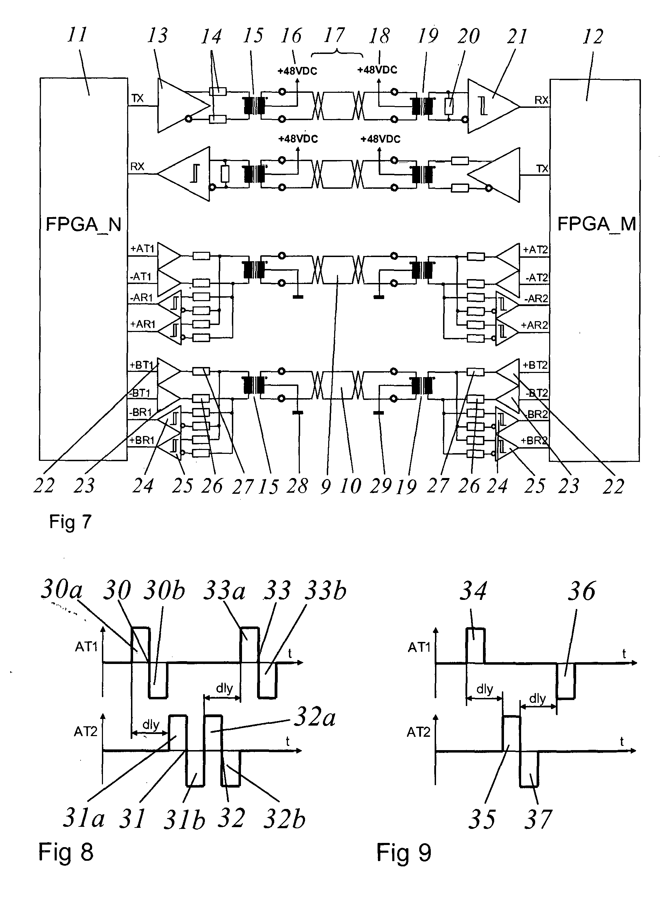

Der Block COM ist für die Kommunikation zuständig, hat typischerweise eine programmierbare Logikschaltung und entspricht einer Logikschaltung (11 FPGA_N, in Fig. 7), wie sie auch bei manchen Ausführungsformen der Erfindung zum Einsatz kommt.

Die parallele Datenverarbeitung hat den Vorteil, dass die Verarbeitungsgeschwindigkeit, unabhängig von der Komplexität, immer gleich schnell ist.

Die Blöcke µP, IPO und SAFETY werden hier nicht weiter beschrieben, da sie für die vorliegende Erfindung nicht von unmittelbarer Bedeutung sind, und sie bspw. in der EP 1 749 609 B1 detailliert beschrieben sind. Die dortige Beschreibung zu µP, IPO und SAFETY wird hierin durch Bezugnahme mit aufgenommen.

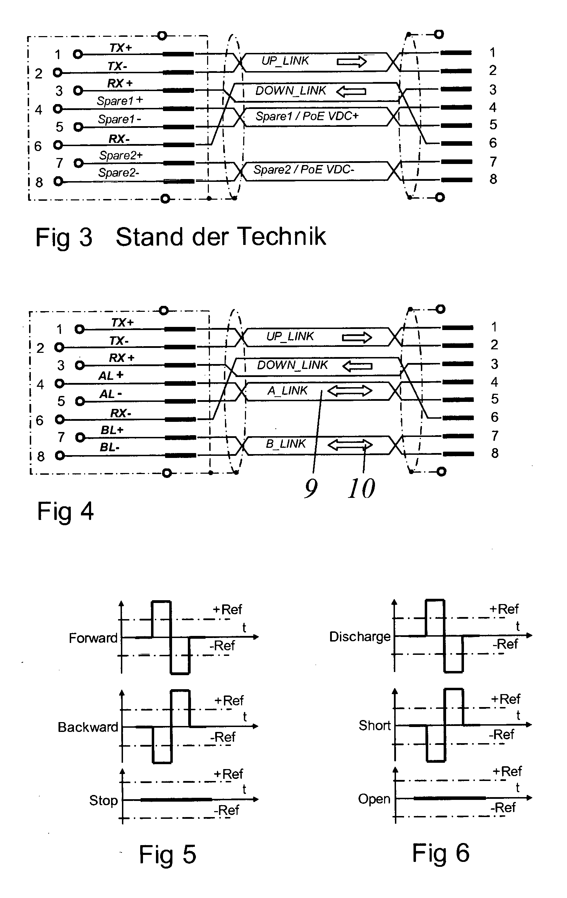

Fig. 3 zeigt die genormte Belegung des bekannten ETHERNET-Cat.5-Kabels für Datenraten bis 100Mbit/s, wie es auch bei manchen Ausführungsformen verwendet wird. Normalerweise sind nur die Leiterpaare TX+, TX-, die zusammen einen UP_LINK bilden und RX+, RX-, die zusammen einen DOWN_LINK bilden, immer belegt. Bei dieser Ausführungsform bilden die Leiterpaare TX+, TX- des UP_LINK den Datenpfad vom Knotenpunkt 5 zu einem Modul 8 hin und die Leiterpaare RX+, RX- des DOWN_LINK bilden den Datenpfad von einem Modul 8 zurück zum Knotenpunkt 5, sodass insgesamt eine bidirektionale Übertragung möglich ist.

Die Wahl der Steckeranschlüsse "3" und "6" für das Leiterpaar RX+, RX-(DOWN_LINK) ist aus historischen Gründen (Telefonie) nicht in der Reihenfolge 3 und 4 (und damit unlogisch). Eine Nichtbeachtung dieser Besonderheit in der Reihenfolge und bspw. eine Belegung in der Reihenfolge der Anschlüsse "1" bis "8" führt allerdings bei manchen Ausführungsformen wegen verkoppelter Leiterpaare zu einer schlechten Übertragungsqualität.

Die Leiterpaare, die mit Spare1 ("4" und "5") und Spare2 ("7" und "8") bezeichnet sind, sind im Normalfall nicht belegt. Allerdings gibt es eine Ausnahme. Zum Beispiel ist bei einer Variante von Power over Ethernet (PoE), nach IEEE802.3af, die Gleichspannungsversorgung PoE VDC+ und PoE VDC- direkt über diese zwei Leiterpaare geführt.

Diese Art Datenkabel kann beispielsweise, verglichen mit normalen Flachkabeln, dank verdrillter Leiterpaare magnetische Störfelder besser kompensieren und kann dank der gemeinsamen Abschirmung bis in den Steckerbereich hinein auch elektrische Störfelder besser kompensieren.

Die Ausbreitungsgeschwindigkeit über Cat.5-Kabel ist vergleichsweise hoch. Sie erreicht typischerweise 72% der Lichtgeschwindigkeit, oder 216m/µs, worauf anhand der Fig. 8 und 9 noch näher eingegangen werden wird.

Fig. 4 zeigt anhand einer Ausführungsform das Prinzip der erfindungsgemäßen Erweiterung und Belegung eines Cat.5-Kabels mit zwei zusätzlichen, asynchronen Übertragungskanälen 9, 10 ("AL+" und "AL-" bzw. "BL+" und BL-"), die auch als A_LINK und B_LINK bezeichnet werden, und die für die Übertragung zufälliger Ereignisse bzw. zur Übertragung von Daten vorgesehen sind, die zufällige Ereignisse repräsentieren.

Diese zwei Übertragungskanäle 9 und 10 sind dynamisch konfigurierbar, d.h. was und in welcher Richtung etwas übertragen wird, kann jederzeit über die seriellen Datenkanäle UP_LINK und DOWN_LlNK neu festgelegt werden. lm Gegensatz zu den seriellen Kanälen UP_LINK, DOWN_LINK kann jeder Kanal für zufällige Ereignisse 9, 10, A_LINK, B_LINK abwechselnd in beiden Richtungen (Halbduplex) betrieben werden. Dies wird anhand der Fig. 8 und 9 nachfolgend erläutert.

Mit dieser Erweiterung wird die erwähnte Variante der Gleichspannungsübertragung nach IEEE802.3af auf den A_LINK und B_LINK Kanälen natürlich bei manchen Ausführungsformen hinfällig.

Fig. 5 zeigt das Prinzip der Einzelimpuls-Codierung von zwei diskreten Ereignissen für die Steuerung oder die Positionsmeldung von Antriebsachsen, wie sie bei manchen Ausführungsformen zum Einsatz kommt.

Die Einzelimpuls-Codierung ist an die bekannte Manchester-Codierung angelehnt. Das Prinzip der Manchester-Codierung ist deshalb für manche Ausführungsformen so interessant, weil der Manchester-codierte Datenstrom prinzipiell keine Gleichspannungskomponente aufweist. Somit tritt praktisch nie eine Sättigung induktiver oder kapazitiver Kopplungs-Bauteile auf. Außerdem kann die Taktrate aus dem Datenstrom rekonstruiert werden.

Bei manchen Ausführungsformen interessiert besonders die erste Eigenschaft und die verwendeten Einzelimpulse sind entsprechend codiert. Bei manchen Ausführungsformen kommt aber auch die Tatsache zum tragen, dass bei Einzelimpulsen drei Zustände signalisiert werden können, nämlich: kein Signal, d.h. es wird kein Einzelimpuls gesendet (Grundzustand), Signal mit beginnender positiver Halbwelle, auch positiver Impuls im Folgenden genannt (erstes Ereignis), und Signal mit beginnender negativer Halbwelle, auch negativer Impuls im Folgenden genannt (zweites Ereignis).

Das kann beispielsweise bei manchen Ausführungsformen für eine Antriebsachse für die Sollwert- und Istwertübertragung in Form von Weginkrementen (Forward, Backward, Stop) über die Leiterpaare A_LINK bzw. B_LINK genutzt werden, wie im folgenden beschrieben wird.

Das stochastische Ereignis "Forward" wird bspw. durch einen positiven Einzelimpuls signalisiert (Fig. 5 oben). Direkt anschließend an den positiven Impuls folgt ein negativer Impuls, um, wie bei der Manchester-Codierung, zu verhindern, dass eine Gleichspannungskomponente entsteht und dadurch eine unerwünschte Aufladung entsteht. Das stochastische Ereignis "Backward" wird durch einen negativen Impuls signalisiert, dem ein positiver Einzelimpuls folgt, um wiederum das Entstehen einer Gleichspannungskomponente zu unterdrücken. Das stochastische Ereignis "Stop" kann dadurch erkannt werden, dass kein Einzelimpuls gesendet wird.

Die Einzelimpulse können in den Ausführungsformen eine definierte Breite und Höhe (Amplitude) aufweisen, damit sie bspw. von Störsignalen unterschieden werden können.

lm Gegensatz zur bekannten Manchester-Codierung, bei der ein Taktsignal durchläuft, wird für die Übermittlung der Einzelimpulse kein durchgehendes, kontinuierliches Taktsignal verwendet, sondern die Einzelimpulse werden taktfrei übertragen. Ein lmpulsformer formt bspw. in Reaktion auf ein stochastisches Ereignis einen Einzelimpuls, der sofort über die zugehörige Leitung übertragen wird. Durch die taktfreie Übertragung können entsprechende Verzögerungen, die eingangs im Zusammenhang mit der Bandbreite von bspw. 100 MHz oder sogar 500 MHz bei typischen Cat.-5 und Cat.6-Kabeln entsteht, vermieden werden.

lm einfachsten Fall werden die positive und negativen Impulse mit festen Referenzen +Ref, -Ref detektiert und in Form der digitalen Signale -AR1, +AR1, -AR2, +AR2, -BR1, +BR1, -BR2 und +BR2 an Logikschaltungen 11, 12, die auch als FPGA_N, FPGA_M in Fig. 7 bezeichnet werden, weitergeleitet. Die festen Referenzen dienen dabei bspw. als Auslöseschwelle für einen Differenzial-Empfänger, wie er unten im Zusammenhang mit Fig. 7 weiter erläutert wird. Dabei bilden die stochastischen Ereignisse die Sollwert- und Istwertübertragung in Form von Weginkrementen (Forward, Backward, Stop).

Für eine höhere Sicherheit gegen Störimpulse können bei manchen Ausführungsformen zusätzliche Spannungs- und Zeitreferenz-Messfenster definiert werden, um nichtkonforme Signale zu erkennen.

Zum Beispiel kann ein fehlerhaft empfangenes Signal (Einzelimpuls) daran erkannt werden, ob ein Signal bzw. ein Einzelimpuls in seiner Amplitude und/oder in seiner Dauer dem erwarteten codierten Einzelimpuls entspricht.

Fig. 6 zeigt das Prinzip der Einzelimpuls-Codierung von zwei diskreten Ereignissen für die Erfassung des Zustandes der Funkenstrecke von Funkenerosionsmaschinen.

Die Erfassung des Zustandes einer solchen Funkenstrecke ist, wie eingangs diskutiert, besonders zeitkritisch und wird normalerweise als Analogsignal in das Prozessleitsystem übertragen und erst dort quantisiert und analysiert.

Erfindungsgemäß werden nun bei manchen Ausführungsformen die drei an Ort (direkt bei der Funkenstrecke) quantisierten Zustände "Discharge" (Entladung aktiv), "Short" (Kurzschluss aktiv) und "Open" (Leerlauf aktiv) über ein Leiterpaar A_LINK (9, Fig. 4) oder B_LINK (10, Fig. 4) übertragen. Dabei treten diese drei Zustände 3Discharge", "Short" und "Open" als stochastische Ereignisse auf.

Ein positiver Impuls signalisiert dabei den Zustand "Discharge", ein negativer Impuls den Zustand "Short" und kein Einzelimpuls den Zustand "Open". Wie im Zusammenhang mit Fig. 5 erläutert, folgen den positiven/negativen Einzelimpulsen entsprechende Impulse mit entgegengesetzter Polarität um das Auftreten einer Gleichspannungskomponente zu verhindern.

Die Übertragung findet dabei bspw. von einem entsprechenden Modul 8, bspw. "Measure", zum zentralen Knotenpunkt 5 statt.

Sowohl das entsprechend Modul 8 als auch der zentrale Knotenpunkt 5 weisen dazu eine Programmierbare Logikschaltung auf, wie weiter unten im Zusammenhang mit Fig. 7 erläutert wird.

Die Referenz-Pegel und Analyseverfahren für diese drei Zustände können bei manchen Ausführungsformen auch jederzeit über die serielle Übertragung UP_LINK geändert werden.

Diese drei Zustände können bei manchen Ausführungsformen ständig (taktfrei) übertragen werden und führen so zu einer extrem schnellen, genauen und störsicheren Identifizierung der Vorgänge in der Funkenstrecke. Bei manchen Ausführungsformen sind Abtastraten von bis zu 100 Millionen Zustände pro Sekunde über ein einziges Leiterpaar A_LlNK (9, Fig. 4) oder B_LlNK (10, Fig. 4) eines Cat.5-Kabels möglich. Entsprechend können bei manchen Ausführungsformen über beide Leiterpaare 200 Millionen Zustände pro Sekunde übertragen werden, beispielsweise über ein 8m Kabel bei einer typischen Latenzzeit von 45ns je Leiterpaar.

Fig. 7 zeigt das Prinzip der modularen, seriellen Datenübertragung "LlNK" zwischen dem Knotenpunkt 5 und einem Modul 2 oder 8 bei einer Ausführungsform. Der zentrale Knotenpunkt 5 weist eine Programmierbare Logikschaltung FPGA_N 11 auf, die mehr oder weniger dem Block COM in Fig. 2 entspricht und eine Vielzahl von Datenverbindungen LINK 6 bedient, wovon eine einzelne in Fig. 7 detailliert dargestellt ist.

Der Bereich TX, RX, der mit Bezugszeichen 13 bis 21 versehen ist, stellt die serielle bidirektionale Datenverbindung nach dem Vorbild IEEE802.3 zu einer bis etwa 10m entfernten Programmierbaren Logikschaltung FPGA_M 12 in einem beliebigen Modul 2, bspw. im Elektroschrank oder Modul 8, in der Funkenerosionsmaschine 4 dar.

Das über den UP_LINK zu sendende Digitalsignal TX kann über einen Differential- Leitungstreiber 13, über Leitungs-Abschlusswiderstände 14, einen Sendetransformator 15, das Cat.5-Kabel 17, das dem Datenkabel "LINK" (6 in Fig. 1) entspricht, einen Empfangstransformator 19, einen Differential-Empfänger 21 mit Abschlusswiderstand 20, als zu empfangendes Digitalsignal RX der Programmierbaren Logikschaltung FPGA_M 12 eines Moduls 2 oder 8 zugeführt werden. Entsprechend gleich mit den gleichen Komponenten 13 bis 21, jedoch in Gegenrichtung, ist der DOWN_LlNK aufgebaut.

Der A_LINK 9 und B_LlNK 10 kann, wie oben im Zusammenhang mit Fig. 4 erwähnt, im Halbduplexverfahren betrieben werden. Zu diesem Zwecke sind beidseits der Übertragungsstrecken der Datenkanäle A_LINK 9 und B_LINK 10 für die Übertragung stochastischer Ereignisse Positive Differentialempfänger 24 und Negative Differentialempfänger 25 vorgesehen, die ständig empfangsbereit sind. Der Positive Differentialempfänger 24 kann positive Impulse, wie im Zusammenhang mit Fig. 5 und 6 beschrieben, detektieren und der Negative Differentialempfänger 25 kann negative lmpulse detektieren. Der Positive Differentialempfänger 24 auf der Seite der Programmierbaren Logikschaltung 11 (FPGA_N) im Knotenpunkt 5 und der Negative Differentialempfänger 25 auf der Seite der Programmierbaren Logikschaltung 12 (FPGA-M) im Modul 2 oder 8 übertragen die detektierten Digitalsignale -AR1 (negatives Signal vom A_LINK im Knotenpunkt 5) bis +BR2 (positives Signal vom B_LINK in einem Modul 2 oder 8) zu den entsprechenden Programmierbaren Logikschaltungen FPGA_N 11, FPGA_M 12. Die Empfänger 24 und 25 können dabei mit Widerständen gekoppelt sein, um die Eingangs-Kapazitäten und Rückwirkungen der Empfänger 24, 25 vom Signal zu isolieren.

Weil, wie zur Fig. 5 erläutert, die drei Zustände "kein Signal", "Positiv beginnendes Signal" und "Negativ beginnendes Signal" als Einzelimpuls gesendet werden sollen, müssen jeweils zwei Digitalsignale +AT1, -AT1 bis +BT2, -BT2 von den entsprechenden Programmierbaren Logikschaltungen FPGA_N 11, FPGA_M 12 den Positiven Leitungstreibern 22 und Negativen Leitungstreibern 23 zur Verfügung stehen. Der vierte mögliche Zustand "Positives und Negatives Signal" fällt weg, da dieser im Empfänger nicht mehr vom Zustand "Kein Signal" unterschieden werden könnte.

Es könnten grundsätzlich bei manchen Ausführungsformen hier ebenfalls Differential-Leitungstreiber ähnlich zu dem obigen 13, mit zusätzlichem "Three-state"-Zustand (einem hochohmigen dritten Zustand) verwendet werden. Allerdings ist dieser dritte Zustand meistens bedeutend langsamer und zudem ist ein hochohmiger Leitungsabschluss auch für kurze Leitungen bei manchen Ausführungsformen absolut unerwünscht.

Zwischen den Transformatoren 15 bzw. 19 und den Sendern 22, 23 sind jeweils Leitungs-Anpasswiderstände 26 und 27 gekoppelt. Die Leitungs-Anpasswiderstände 26 und 27 bleiben erfindungsgemäß bei manchen Ausführungsformen während allen drei Zuständen eingeschaltet und garantieren so einen ständigen Leitungsabschluss.

Bei einer alternativen Ausführungsform gibt es eine Variante, bei der der Gleichstrom, der normalerweise beim Cat.5-Kabel auf den Kanälen Spare1 und Spare2 (siehe oben und Fig. 3) anliegt, unter Verwendung aller vier Leiterpaare, wie in Fig. 7 dargestellt, jeweils über Mittelanzapfungen 16, 18 bzw. 28, 29 der Sende- 15 und Empfangstransformatoren 19 zum Empfänger geführt wird, also bspw. zum Modul 2 oder 8. Dadurch ergibt sich zusätzlich der Vorteil, dass alle Leiterpaare, welche die Sendetrafos 15 mit den Empfangstrafos 19 verbinden, auf dem Potential der 48VDC- Speisung liegen, und somit nicht elektrostatisch aufgeladen werden können.

Dies entspricht prinzipiell der zukünftigen Norm IEEE802.3at, welche eine Leistung bis maximal 30W über 100m liefern soll. Eine Polaritätskorrektur mit Gleichrichterbrücken im Empfänger, wie sie die erwähnte Variante der IEEE802.3af vorsieht, ist hier nicht erforderlich, da die richtige Polarität jederzeit gewährleistet ist. Bei dieser Ausführungsform wird nicht nur die Gleichrichterbrücke eingespart, sondern auch deren Spannungsabfall von etwa 2V, was vorteilhaft zusätzliche 2W Leistung verfügbar macht. Damit, und weil die Länge des Kabels maximal 10m beträgt, kann je nach gewähltem Kabelquerschnitt, eine Leistung von sogar mehr als 50W problemlos übertragen werden.

Bei unkontrolliertem Halbduplexverfahren sind natürlich Datenkollisionen bei manchen Ausführungsformen nicht auszuschließen. Schäden an den Daten-übertragungseinrichtungen sind nicht zu befürchten, aber Folgeschäden wegen Falschinformation könnten verheerend sein.

Datenkollisionen können wegen der endlichen Signallaufzeiten immer nur zu spät festgestellt werden, darum ist das unkontrollierte Halbduplexverfahren bei manchen Ausführungsformen nur in Sonderfällen brauchbar.

Das kontrollierte Halbduplexverfahren verhindert Datenkollisionen indem festgelegt wird, welcher Sender, wann senden darf. Das kann im einfachsten Fall ständig in eine Richtung sein, wie im Fall des Zustandes einer Funkenstrecke nach Fig. 6. Dort werden die Zustände "Discharge", "Short" und "Open" nur von dem Modul 8 "Measure" ausgehend zum zentralen Knotenpunkt 5 gesendet.

Da einzelne Fehlübertragungen keine oder nur unbedeutende Auswirkungen auf das Bearbeitungsresultat hätten, lohnt sich eine Bestätigung jedes korrekt empfangenen Impulses in diesem Fall nicht. Eine Überprüfung beim Empfänger für Statistik, Diagnose und Sicherheit ist dennoch empfehlenswert.

Geschwindigkeit und Sicherheit beeinträchtigen sich gegenseitig: für Sicherheit muss überprüft oder gefiltert werden, was eine bestimmte Zeit braucht. Darum werden nachfolgend geeignete Verfahren zur Milderung dieser Einschränkung vorgeschlagen, die bei manchen Ausführungsformen Anwendung finden.

Fig. 8 zeigt eine Ausführungsform eines ersten Prinzips einer schnellen und sicheren Übertragung von zufälligen Ereignissen, wobei die zugehörige Vorrichtung zur Übertragung von zufälligen Ereignissen im Wesentlichen der in Fig. 7 gezeigten entspricht.

Es sei angenommen, dass FPGA_N 11 über den Kanal AT1, und ein 8m langes Cat.5-Kabel an FPGA_M 12 den Zustand "Positiver Impuls" in Form eines Impulses 30 signalisieren soll, der aus einem positiven Einzelimpuls 30a und einem entsprechenden negativen Einzelimpuls 30b gebildet ist. Wie oben erwähnt, dient der negative Einzelimpuls 30b dazu, das Auftreten einer Gleichspannungskomponente zu verhindern.

Um den Impuls 30 zu formen, wird vom FPGA_N (11, Fig. 7) vorerst der Ausgang +AT1 für beispielsweise eine Zeitdauer von 10ns aktiviert, wodurch der positive Einzelimpuls 30a gebildet wird, und gleich anschließend wird der Ausgang -AT1 für eine Zeitdauer von 10ns aktiviert, wodurch der negative Einzelimpuls 30b gebildet wird. Durch die Aktivierung des Ausgangs +AT1 entsteht eine steigende Flanke des Einzelimpulses 30a und durch Aktivierung des Ausgangs -AT1 eine fallende Flanke des Einzelimpulses 30b.

Bei einer Signal-Ausbreitungsgeschwindigkeit von 216m/µs trifft der zusammengesetzte Impuls 30 als Impuls 31 (unten in Fig. 8) durch das 8m lange Cat.5-Kabel nach einer Verzögerung von 37ns an den Eingängen +/- AR2 des FPGA_M 12 (Fig. 7) ein, und kann dort sofort, d.h. nahezu ohne Zeitverzögerung, verarbeitet werden. Der Impuls 31 ist entsprechend aus dem positiven Impuls 31 a und negativen Impuls 31b zusammengesetzt.

Eine Übertragung über 8m Kabel hätte bei einer Ausbreitungsgeschwindigkeit von 216m/µs also eine Zeitverzögerung von lediglich 37ns zur Folge. Dazu kommen wenige ns an Zeitverzögerung für die Sender 22, 23, d.h. die oben beschriebenen positiven und negativen Leitungstreiber 22, 23, und die Empfänger 24, 25, d.h. die oben beschriebenen positiven und negativen Differentialempfänger 24, 25, sodass eine stabile Latenzzeit dly-von typischerweise 45ns resultiert, wie sie in Fig. 8 angedeutet ist. Diese Latenzzeit entspricht der Verzögerungszeit von 37ns durch die Übertragung über das 8m lange Kabel und zusätzlichen 8ns für die Verarbeitung in den Sendern 22, 23 und Empfänger 24, 25.

Um dieses erste Prinzip sicher zu machen, wird bei manchen Ausführungsformen die Signalintegrität überprüft, wie anhand der Fig. 5 oben diskutiert wurde. Die Überprüfung der Signalintegrität anhand der Amplitude und Dauer eines Impulses dauert bspw. 10 ns. Bei positivem Testergebnis kann nach dem Ende des empfangenen (zusammengesetzten) Impulses 31 ein Bestätigungsimpuls 32 vom FPGA_M 12 zurück an den zentralen Knotenpunkt 5 bzw. dessen FPGA_N 11 gesendet werden. Der Bestätigungsimpuls 32 ist aus einem positiven Impuls 32a und negativen Impuls 32b zusammengesetzt. Dieser Bestätigungsimpuls 32 trifft nach einer weiteren Latenzzeit dly als Bestätigungsimpuls 33 bei FPGA_N 11 ein. Der Bestätigungsimpuls ist ebenfalls aus einem positiven Impuls 33a und einem negativen Impuls 33b zusammengesetzt. Zwischen dem Ende des gesendeten Impulses 30 und dem Anfang des empfangenen Bestätigungsimpulses 33 liegt genau eine Zeit von 2*dly also 2*45ns = 90ns. Diese Latenzzeit kann zur Überprüfung der Integrität der Übertragungsstrecke zusätzlich verwendet werden.

Bei negativem Testergebnis wird kein Bestätigungsimpuls 32 zurückgesendet. Bei einer alternativen Ausführungsform wird ein Bestätigungsimpuls mit umgekehrter Polarität zurückgesendet, um das negative Testergebnis und damit den Übertragungsfehler zu signalisieren. Die schon erfolgte Verarbeitung des Ereignisses muss dabei natürlich rückgängig gemacht oder korrigiert werden.

Diese sichere Übertragung dauert inklusive Verifikation also 2*45ns + 4*10ns = 130ns, wenn man annimmt, dass die Verifikation 10ns benötigt. Danach kann ein neues Ereignis signalisiert werden, was insgesamt maximal 7,69 Millionen Ereignisse pro Sekunde ermöglicht. Dies entspricht beispielsweise der Steuerung einer Antriebsachse mit einer Maximalgeschwindigkeit von 7.69m/s bei einer Wegauflösung von 1 µm.

Eine weitere Variante dieses ersten Prinzips sieht vor, die Weiterverarbeitung erst nach einem erfolgreichen Test freizugeben. Die Latenzzeit erhöht sich doc-durch zwar auf 45ns + 2*10ns = 65ns, dafür entfallen aber im Fehlerfall die Korrekturen. Die Übertragungsdauer bleibt natürlich unverändert bei 130ns.

Fig. 9 zeigt eine Ausführungsform eines zweiten Prinzips einer noch schnelleren Übertragung von zufälligen Ereignissen. Dieses zweite Prinzip ist etwas mehr auf Geschwindigkeit, bei einer nur leichten Reduktion der Sicherheit optimiert.

Es wird vom Sender AT1 nur die ein erster positiver Einzelimpuls 34 gesendet. Nach der Latenzzeit dly trifft beim Empfänger AR2 der positive Einzelimpuls 34 als positiver Einzelimpuls 35 ein, wird überprüft, und bei positivem Resultat mit dem negativen Bestätigungsimpuls 37 vom Sender AT2 quittiert und nach einer weiteren Latenzzeit dly vom Empfänger AR1 als negativer Einzelimpuls 36 empfangen. Hier wird also das Entstehen einer Gleichspannungskomponente unterdrückt, in dem ein Bestätigungsimpuls gesendet wird, der eine zum empfangenen lmpuls entgegengesetzte Polarität hat.

Die Latenzzeit dly ist natürlich gleich wie beim ersten Prinzip: 45ns, die Übertragungsdauer inklusive Verifikation hingegen: 2*45ns + 2*10ns = 110ns, was maximal 9,09 Millionen Ereignisse pro Sekunde, oder für eine Antriebsachse eine Maximalgeschwindigkeit von 9.09m/s bei 1µm Auflösung ermöglicht. D.h. das zweite Prinzip ist etwa 18% schneller als das erste Prinzip. Man erkennt hier nochmals klar, dass die totale Signallaufzeit von 90ns bei einer gesicherten Übertragung über 8m Kabel dominant ist, und damit rein physikalisch die maximale Leitungslänge limitiert. Cat.6-oder Cat.6a-Kabel würden hier nur eine unbedeutende Verbesserung bringen, da sie eine ähnliche Ausbreitungsgeschwindigkeit wie das Cat.5-Kabel aufweisen.

Bei einem Übertragungsfehler muss vom Sender AT1 auch der zweite (negative) Einzelimpuls 37 gesendet werden, um das Gleichgewicht der Signalspannung wiederherzustellen. Das führt mindestens zu einer Zeitverzögerung von weiteren 10ns. Außerdem darf der Empfang des zweiten Impulses 37 vom Empfänger AR2 nicht als neues Ereignis gewertet werden.

Dieses Verfahren ist also eher für störarme Übertragungsstrecken geeignet und die Fehlerbehandlung sollte für diese Ausführungsform die Ausnahme bilden, sonst lohnt sich die Sicherheitseinbuße gegenüber dem ersten Prinzip nicht.

Bei manchen Ausführungsformen können Kollisionen von Einzelimpulsen auch dadurch erkannt werden. dass bspw. auf einer Empfängerseite im Empfänger 24, 25 ein Einzelimpuls empfangen wurde, obwohl der zugehörige Sender 22, 23 auf derselben Seite des Datenkabels keinen Einzelimpuls gesendet hat. Bei solch einer detektierten Kollision ist es bei manchen Ausführungsformen - vom technischen Standpunkt gesehen - unsinnig weiterzusenden. Daher wird bei manchen Ausführungsformen, auch um eine Fehlverarbeitung zu verhindern, dementsprechend der Sender 22, 23 sofort in den Grundzustand "kein Ereignis" geschaltet. lm Normalfall wird keine Bestätigungsmeldung versendet, da die empfangenen Daten zu unsicher sind. Der abgebrochene Sendeversuch kann je nach Anforderung mit Zeitverzug ein zweites Mal gesendet werden. Alternativ kann die Sendung einfach weggelassen werden.

Bei manchen Ausführungsformen werden Meldungen von stochastischen Ereignissen, über mehr als eine Station gesendet. Zum Beispiel können Einzelimpulse von dem Modul 8 "Drive" (Fig. 1) über den Knoten 5 weiter zum Steuermodul 2 "CNC" gesendet werden. Um die Verzögerungszeiten möglichst kurz zu halten, werden bei manchen Ausführungsformen solche Einzelimpulse, die nicht direkt für den ersten Empfänger bestimmt sind und folglich über mehr als eine Station laufen, vom ersten Empfänger über eine Logikschaltung 11 ( FPGA_N) direkt auf den nächsten Sender umgeleitet. Diese direkte Umleitung der Einzelimpulse wird von Steuersystemen im Knoten 5 selber, oder von übergeordneten Systemen über den Ethernetanschluss 3' organisiert. Genauer gesagt, diese Steuersysteme veranlassen in diesem Fall die Logikschaltung FPGA_N 11 die Eingänge +/-AR1 bzw. +/-BR1 von den Differentialempfängern 24, 25 direkt mit den entsprechenden Ausgängen +/-AT1 bzw. +/-BT1 zu den Leitungstreibern 22, 23 zu verbinden. Es entstehen dadurch nur die sehr geringen Zeitverluste der Eingangs- und Ausgangsblöcke der Logikschaltung FPGA_N11.

Bei der vorliegenden Ausführungsform mit Sternverkabelung wäre prinzipiell die direkte Umleitung ausschließlich im Knoten 5 anwendbar. In gewissen Fällen kann dennoch eine direkte Umleitung in einem Modul 2 oder 8 nützlich sein, um beispielsweise über die Eingänge +/-AR2 bzw. +/-BR2 der Logikschaltung FPGA_M 12 empfangene Meldungen direkt über die Ausgänge +/-BT2 bzw. +/-AT2 zurückzusenden. Mit anderen Worten wird bei manchen Ausführungsformen eine vom A_LINK empfangene Sendung umgehend und ohne Modifikation über den B_LINK zurückgesendet und entsprechend umgekehrt eine vom B_LINK empfangene Sendung über den A_LINK zurückgesendet. Das braucht zwar bei manchen Ausführungsformen viel Ressourcen, bringt aber zwei Vorteile: 1.) eine Datenkollision ist ausgeschlossen, 2.) der Sender kann schon nach zwei Signallaufzeiten des Übertragungskabels feststellen, dass die Sendung angekommen ist. Bei der Ausführungsform nach Fig. 8 würde das eine Erhöhung der maximalen Übertragungsrate von 6,69 Millionen auf 11,1 Millionen Ereignissen ermöglichen, also eine Verbesserung von etwa 61%, was allerdings 100% mehr an Ressourcen kostet.

An dieser Stelle sei nochmals auf die Vorteile einer schnellen digitalen Datenübertragung bei manchen Ausführungsformen für die Antriebstechnik hingewiesen, denn derart hohe Aufdatierungsraten für Soll- und Istwertposition ermöglichen völlig neue Ansätze für die Regelverfahren, insbesondere von Werkzeugmaschinen wie Funkenerosionsmaschinen.

Als zukunftsträchtig gelten Regelverfahren, welche sich vermehrt am Prinzip der Ballistik und der Prognostik orientieren. Dafür sind noch keine Bezeichnungen bekannt, bei der nachfolgenden Diskussion von Ausführungsformen werden sie als "Ballistische Antriebe" bezeichnet.

Ballistische Antriebe bewegen nicht mehr blind, gestützt auf eine veraltete Abweichung von der berechneten Bahngeometrie, sondern gestützt auf eine zukünftige Position unter Berücksichtigung der eben beobachteten Abweichung, die durch Störgrößen wie Masse, Reibung, Bearbeitungskräfte, thermische Einflüsse, unter vielen anderen, verursacht werden. Der wahrscheinliche Einfluss auf die zukünftige Position wird berechnet und kompensiert. Die Bahnkorrekturen werden auch nicht mehr in einem Zeittakt vorgenommen, sondern asynchron zum optimalen Zeitpunkt und mit genau quantisierten Impulsen. Dazu sind zwingend asynchrone Positionsdaten in Echtzeit für Soll- und Istwerte erforderlich.

Die Raumfahrt stützte sich seit jeher auf die Ballistik, und das Prinzip der Bahnvermessung und der genau dosierten und zeitlich genau bestimmten Bahnkorrekturen ist zumindest seit den Apollo-Mondlandungen einer breiten Öffentlichkeit bekannt.

Erste Ansätze in dieser Richtung sind vom funkenerosiven Drahtschneiden bekannt. Die EP 801 341 B1 offenbart eine Bahnkorrektur, um in Zonen starker Bahnkrümmung die durch die Bearbeitungskräfte verursachten Fehler zu eliminieren. Die Bahnkorrektur wird in Echtzeit anhand der Bearbeitungsleistung errechnet.

Die EP 578 018 B1 offenbart eine ähnliche Bahnkorrektur für die Feinstbearbeitung, wobei ein beschränkt genau vorgeschnittenes Werkstück in Echtzeit vermessen und daraus die Bahnkorrektur abgeleitet wird. Dies ermöglicht auch für große Werkstücke eine hohe Oberflächengüte über die gesamte Kontur.

Die EP 920 943 B1 offenbart ein Verfahren für die Feinstbearbeitung, um Fehler durch elektrostatische Kräfte auf die Drahtelektrode zu vermeiden. Eine Auslenkung der Drahtelektrode wird in Echtzeit erfasst und über die Bahngeschwindigkeit und die Generatorleistung kompensiert.

Es gibt vielfältige Anwendungen für solche Systeme im Maschinenbau. Zum Beispiel werden Antikollisionssysteme effektiver, wenn sie auf eine schnelle Positionsinformation und nicht nur auf eine abnormale Abweichung vom Sollwert des unterlagerten Stromregelkreises abgestützt werden können. Die Erfindung ermöglicht bei manchen Ausführungsformen eine sichere Kollisionserkennung in weniger als etwa 1µs. Bei einer Geschwindigkeit von 10m/s wird während dieser Zeit lediglich eine Wegstrecke von 10µm zurückgelegt. Man kann erhebliche Schäden verhindern, wenn es durch eine Notbremsung gelingt, die Verformungen der Strukturteile der Maschine im elastischen Bereich zu halten. Nach einer Kollision kann sogleich anhand des Verlaufs des Notbremsvorgangs und anhand von Erfahrungswerten eine provisorische Schadenseinschätzung abgegeben werden.

Die Auswirkungen bei einer Positionsmeldung von beispielsweise nur alle 10µs oder 100µs können folglich erheblich sein und es können große Schäden verursacht werden.

Ein weiteres Beispiel sind hochauflösende und hochdynamische Antriebsachsen, wenn diese trotz Störungen in einer präzisen Position gehalten werden sollen. Das wird mit bekannten Systemen zur Herausforderung, da eine hohe Präzision eine hohe Kreisverstärkung bedingt, was dann oft zu unerwünschten Schwingungen führt. Die Gründe dafür können mehrere sein: veränderte Reibungswerte, veränderte Masse, veränderte Bearbeitungskräfte, meist aber veraltete Istwerte.

Ein ballistischer Antrieb ist frei von all diesen Problemen. Der Aktor kann bei manchen Ausführungsformen sogar aus dem Positions-Regelkreis herausgehalten werden, sofern die erzeugten Impulsquanten mit genügender Genauigkeit und Stabilität garantiert sind.

Die hochdynamischen ballistischen Antriebe befinden sich noch im frühzeitigen Entwicklungsstadium. Die vorliegende Erfindung könnte einen wertvollen Beitrag zu deren Kommerzialisierung leisten.

Alle angeführten Beispiele dienen ausschließlich dem besseren Verständnis der Erfindung. Rein illustrative Angaben sind nicht einschränkend zu verstehen.

Es folgen noch einige allgemeine Erläuterungen zu den Ausführungsformen der vorliegende Erfindung.

Aus der obigen Diskussion der Ausführungsformen ergibt sich, dass bei manchen Ausführungsformen eine bekannte serielle Datenverbindung wie beispielsweise ETHERNET, veröffentlicht in lEEE802.3, zur direkten Übermittlung von zufälligen Ereignissen, ohne die Synchronisation mit einem Taktsignal vornehmen zu müssen oder einen zyklischen Sendezeitpunkt abwarten zu müssen, erweitert wird. Dabei können bspw. zwei unterschiedliche, zufällige Ereignisse, mit zwei unterschiedlich codierten Einzelimpulsen dargestellt und ereignisgesteuert und taktfrei gesendet werden. Durch die Taktfreiheit entfallen bei manchen Ausführungsformen eine Synchronisation und auch Verzögerungen, die aufgrund einer Taktrate auftreten können, bis ein Datenpaket abgesendet werden kann. Über eine Leitungslänge von beispielsweise 8m ist dabei eine jitterfreie Latenzzeit von 45ns zwischen einem stochastischen Ereignis und dessen Empfang möglich. Dadurch sind manche Ausführungsformen besonders für kurze, digitale Datenverbindungen zwischen einem Knotenpunkt und mehreren Modulen geeignet, wie sie in modernen Funkenerosionsmaschinen, Werkzeugmaschinen und ähnlichen elektronischen Systemen gebraucht werden.

Wie eingangs erwähnt, betreffen manche Ausführungsformen ein Verfahren zur, insbesondere schnellen, digitalen Datenübertragung von stochastischen Ereignissen. Der Begriff "schnell" bezieht sich hierbei auf Datenübertragungen, die auf einer hohen Ausbreitungsgeschwindigkeit in einem Datenkabel beruhen, die typischerweise mit aktuellen Kabeltypen, wie Cat.5 oder neuer, erreicht werden können, d.h. Ausbreitungsgeschwindigkeiten von bspw. 216m/µs.

Dabei liegt die Übertragungsgeschwindigkeit an der Grenze der physikalisch bedingten Signallaufzeiten, die über Distanzen bis etwa 10m innerhalb von Werkzeugmaschinen, insbesondere Funkenerosionsmaschinen, oder ähnlichen elektronischen Systemen übertragen werden können.

Die erfindungsgemäße Lösung geht bei manchen Ausführungsformen allgemein von seriellen Datenübertragungs-Systemen mit mehreren verdrillten Leiterpaaren, bevorzugt aber vom bekannten ETHERNET-Standard IEEE802.3 aus. Die Erfindung ermöglicht bei manchen Ausführungsformen unter Nutzung brach liegender Ressourcen und einer neuartigen Anwendung und Abwandlung des bekannten Manchester-Codierverfahrens eine hochdynamische Übertragung von zufälligen Ereignissen über vorgegebene Distanzen bis etwa 10m.

Die Daten werden dabei bei manchen Ausführungsformen über eine limitierte bzw. vorgegebene Distanz über ein Datenkabel, wie bspw. das oben erwähnte Cat.5-Kabel, in einer Werkzeugmaschinen, insbesondere Funkenerosionsmaschine, oder einem ähnlichen elektronischen System übertragen.

Die vorgegebene Distanz bezieht sich dabei bspw. auf die Länge des Datenkabels, über das die Daten übertragen werden. Typische Längen des Datenkabels liegen bei manchen Ausführungsformen dabei bei wenigen Metern und, wie erwähnt, bei manchen Ausführungsformen unter 10 Metern, bspw. bei 8 Metern.

Das Datenkabel kann dabei (teilweise) innerhalb einer Werkzeugmaschine angeordnet sein oder aber auch (teilweise) außerhalb eines Gehäuses der Werkzeugmaschine.

Das Datenkabel weist bei manchen Ausführungsformen mehrere verdrillte Leiterpaare auf, wobei mindestens ein Leiterpaar für einen seriellen Datentransfer vorgesehen ist. Bei manchen Ausführungsformen ist die Datenübermittlung über die Leiterpaare auch bidirektional. Mindestens ein weiteres Leiterpaar ist zur Übermittlung von stochastischen Ereignissen vorgesehen, sodass bei manchen Ausführungsformen ein Datentransfer parallel zur Übertragung von stochastischen Ereignissen möglich ist. Bei manchen Ausführungsformen können auch die stochastischen Ereignisse bidirektional übertragen werden.

Stochastische Ereignisse sind dabei, wie oben erwähnt, bspw. zufällige Ereignisse, die bei Funkenerosionsprozessen auftreten können. Aufgrund der hohen Bearbeitungsgeschwindigkeit und der hohen Verarbeitungsgenauigkeit von wenigen Mikrometern, müssen stochastische Ereignissen bei manchen Ausführungsformen innerhalb von wenigen hundert Nanosekunden verarbeitet werden können, da ansonsten die erwähnte hohe Verarbeitungsgenauigkeit von wenigen Mikrometern nicht erreichbar ist.

Die stochastischen Ereignisse können dabei bei manchen Ausführungsformen durch Daten repräsentiert werden, die bspw. entweder einen bestimmten (zufälligen) Zustand darstellen oder nur das Vorhandensein oder NichtVorhandensein eines stochastischen Ereignisses darstellen.

Die Datenübermittlung wird durch Eintritt des stochastischen Ereignisses bei manchen Ausführungsformen nahezu verzugsfrei ausgelöst. Das heißt bei manchen Ausführungsformen entstehen Zeitverzögerungen bis zum Auslösen der Datenübertragung des stochastischen Ereignisses lediglich durch die Verarbeitung innerhalb einer Programmierbaren Logikanordnung.

Das stochastische Ereignis wird dabei bei manchen Ausführungsformen durch einen Einzelimpuls signalisiert und taktfrei übertragen.

Bei der verwendeten Einzelimpuls-Codierung muss folglich, ähnlich wie bei der bekannten Manchester-Codierung, kein separates Taktsignal übertragen werden und dementsprechend entfällt auch eine Synchronisation mit einem solchen Taktsignal bei manchen Ausführungsformen. Außerdem ist die Einzelimpuls-Codierung bei manchen Ausführungsformen frei von einer Gleichspannungskomponente, d.h. der Gleichspannungsanteil ist gleich null. lm Gegensatz zur herkömmlichen Manchester-Codierung werden bei manchen Ausführungsformen kein kontinuierlicher Datenstrom und kein kontinuierliches Taktsignal gesendet, sondern Einzelimpulse werden bspw. durch Auftreten eines stochastischen Ereignisses übermittelt.

Um die stochastischen Ereignisse zu signalisieren, werden Einzelimpulse derart codiert, dass sie wenigstens zwei Zustände signalisieren können. Dazu kann der Einzelimpuls ein positiver Impuls sein, der bspw. ein erstes stochastisches Ereignis signalisiert, und der Einzelimpuls kann ein negativer Impuls sein, der ein zweites stochastisches Ereignis signalisiert. Das Fehlen der Einzelimpulse signalisiert einen Grundzustand.

Bei manchen Ausführungsformen wird auf einen ersten Einzelimpuls direkt ein zweiter Einzelimpuls mit zum ersten Einzelimpuls entgegengesetzter Polarität gesendet. Dadurch kann das Auftreten einer Gleichspannungskomponente verhindert werden, wie oben diskutiert wurde.

Bei manchen Ausführungsformen erfolgt die Übermittlung von stochastischen Ereignissen für beide Richtungen über ein Leiterpaar oder getrennt über zwei Leiterpaare. Bei manchen Ausführungsformen kann die Betriebsart und/oder die Ereignisart dynamisch über den normalen, seriellen (eventuell bidirektionalen) Datentransfer festgelegt werden, der über die Leiterpaare des Datenkabels versendet wird, die für den normalen, seriellen Datenverkehr vorgesehen sind.

Bei manchen Ausführungsformen erfolgt eine Verifikation, dass ein stochastisches Ereignis vorliegt. Dazu kann beim Empfang des Einzelimpulses die Signalintegrität überprüft werden, indem bspw. die Amplitude und die Dauer des Einzelimpulses überprüft wird. Dies ist möglich, da bei manchen Ausführungsformen die Amplitude und die Dauer eines gültigen Einzelimpulses bekannt sind. Dabei kann der Einzelimpuls auch ein Einzelimpuls sein, der für die Unterdrückung einer Gleichspannungskomponente auf einen ersten Einzelimpuls folgend gesendet wird.

Bei einem positiven Befund, d.h. bei Vorliegen eines stochastischen Ereignisses, wird das stochastische Ereignis verarbeitet und durch einen zurückgesendeten Einzelimpuls bestätigt. Bei einem negativen Befund wird hingegen bei manchen Ausführungsformen kein stochastisches Ereignis signalisiert bzw. verarbeitet und keine Bestätigung gesendet. Bei manchen Ausführungsformen kann aber der Übertragungsfehler statistisch erfasst und weiter verarbeitet werden. Zum Beispiel kann bei manchen Ausführungsformen aus einer statistischen Auswertung des Übertragungsfehlers auf eine fehlerhafte Übertragung geschlossen werden, die bspw. auf einem fehlerhaften Datenkabel beruht.

Bei manchen Ausführungsformen wird beim Empfang des Einzelimpulses das Ereignis sofort verarbeitet. Erst anschließend an diese Verarbeitung wird durch Überprüfung einer Amplitude und Dauer des Einzelimpulses verifiziert, ob das stochastische Ereignis vorlag oder nicht. Bei einem positiven Befund wird dann durch einen zurückgesendeten Einzelimpuls bestätigt, dass das stochastische Ereignis tatsächlich vorlag. Bei einem negativen Befund wird keine Bestätigung gesendet. Bei manchen Ausführungsformen wird, wie erwähnt, im Fall des negativen Befundes ein Übertragungsfehler festgestellt. Außerdem wird die Verarbeitung des Ereignisses rückgängig gemacht oder korrigiert und/oder der Übertragungsfehler wird statistisch erfasst. Wie oben erwähnt kann der statistische Übertragungsfehler zur weiteren Verarbeitung und bspw. zur Erkennung eines fehlerhaften Datenkabels verwendet werden.

Bei manchen Ausführungsformen wird nur ein erster Einzelimpuls vom Sender gesendet. Ein zweiter Einzelimpuls mit zum ersten Einzelimpuls entgegengesetzter Polarität wird nach Überprüfung der Signalintegrität und bei positivem Befund der Signalintegrität, d.h. bei Nichtvorliegen eines Übertragungsfehlers, vom Empfänger als Empfangsbestätigung zurückgesendet. Falls bei der Verifizierung der Signalintegrität ein Übertragungsfehler festgestellt wird, wird keine Empfangsbestätigung gesendet. Nach Ablauf einer vorgegebenen Zeit sendet der Sender einen zweiten Einzelimpuls mit zum ersten Einzelimpuls entgegengesetzter Polarität, um das Gleichspannungspotential wieder auszugleichen und eine Aufladung zu verhindern. Der Verarbeitung des stochastischen Ereignisses wird bei manchen Ausführungsformen rückgängig gemacht oder korrigiert und/oder statistisch erfasst. Bei diesen Ausführungsformen ist die Latenzzeit insgesamt geringer, da zunächst nur ein Einzelimpuls übertragen wird und der Ausgleich des Gleichspannungssignals durch Übermitteln eines entsprechenden Einzelimpulses mit entgegengesetzter Polarität zum ersten Einzelimpuls als Bestätigungssignal erfolgt.

Bei manchen Ausführungsformen wird beim Sender die durch die Signallaufzeit verursachte Lücke zwischen dem Ende des gesendeten Einzelimpulses und dem Anfang des empfangenen Bestätigungsimpulses ebenfalls gemessen. Die Signallaufzeit kann als zusätzliches Kriterium für die Datenintegrität und/oder als Maß für die Güte der Übertragungsstrecke für Diagnosezwecke ausgewertet werden.

Bei manchen Ausführungsformen werden Meldungen von stochastischen Ereignissen, welche über mehr als einen Übertragungsweg bzw. mehr als eine Station gesendet werden sollen, vom ersten Empfänger über eine Logikschaltung direkt auf einen nächsten Sender umgeleitet. Dadurch kann eine schnelle Übertragung der Meldungen erreicht werden, da die Meldung nicht in der ersten Empfangsstation weiterverarbeitet wird, sondern erst in der Station, für die die Meldung bestimmt ist.

Manche Ausführungsformen betreffen eine Vorrichtung zur (schnellen) digitalen Datenübertragung von stochastischen Ereignissen, die dazu eingerichtet ist, die obigen diskutierten Verfahren wenigstens teilweise auszuführen.

Die stochastischen Ereignisse werden bspw. über eine limitierte bzw. vorgegebene Distanz in einer Werkzeugmaschine oder einem ähnlichen elektronischen System über ein Datenkabel übertragen. Dabei ist die vorgegeben Distanz bspw. durch die Länge des Datenkabels vorgegeben.

Wie oben erwähnt hat das Datenkabel mehrere verdrillte Leiterpaare, wovon mindestens ein Leiterpaar für einen seriellen, in manchen Ausführungsformen bidirektionalen, Datentransfer vorgesehen ist und mindestens ein weiteres Leiterpaar für die Übertragung stochastischer Ereignisse vorgesehen ist.

Außerdem weist die Vorrichtung wenigstens eine Sendeeinrichtung und wenigstens eine Empfangseinrichtung auf, die jeweils auf einer Seite des Datenkabels angekoppelt sind. Die Sende- und die Empfangseinrichtung liegen dabei auf gegenüberliegenden Seiten des Datenkabels, sodass die Empfangseinrichtung Signale von der Sendeeinrichtung empfangen kann. Sowohl die Sendeals auch die Empfangseinrichtung sind jeweils mit einer Logikschaltung gekoppelt, die bei manchen Ausführungsformen programmierbar ausgestaltet ist.

Die mindestens eine Sendeeinrichtung ist derart ausgelegt, dass sie, wie oben beschrieben, Einzelimpulse taktfrei übermitteln kann. Ein Einzelimpuls kann dabei, wie oben beschrieben, ein "positiver Impuls" oder "negativer Impuls" sein. Ein positiver Impuls signalisiert bspw. ein erstes stochastisches Ereignis, ein negativer Impuls ein zweites stochastisches Ereignis und das Ausbleiben oder Fehlen eines Einzelimpulses signalisiert, dass kein stochastisches Ereignis vorliegt (wie oben beschrieben).

Die Empfangseinrichtung ist dabei für den Empfang stochastischer Ereignisse derart ausgelegt, dass sie die drei Zustände "positiver Impuls", "negativer Impuls" und "kein Ereignis" durch Empfang bzw. nicht Empfang entsprechender Einzelimpulse detektieren kann.

Bei manchen Ausführungsformen ist die mindestens eine Sendeeinrichtung über wenigstens einen Leitungs-Abschlusswiderstand mit den entsprechenden Leiterpaaren zur Übertragung stochastischer Ereignisse gekoppelt. Bei manchen Ausführungsformen bleiben die Sendeeinrichtungen für alle drei Zustände über die Leitungs-Abschlusswiderstände an den Leiterpaaren des Datenkabels gekoppelt, über die die stochastischen Ereignisse gesendet werden.

Bei manchen Ausführungsformen sind sowohl die wenigstens eines Sendeeinrichtung als auch die wenigstens eine Empfangseinrichtung für stochastische Ereignisse für die bidirektionale Datenübertragung ausgelegt. Außerdem sind bei manchen Ausführungsformen die Sende- und Empfängereinrichtungen beidseits des Datenkabels baugleich, wodurch ein kostengünstiger und einfacher Aufbau der Vorrichtung ermöglicht wird. Bei manchen Ausführungsformen sind auf jeder Seite des Datenkabels wenigstens eine Sende- und eine Empfangseinrichtung für den bidirektionalen Datenaustausch vorgesehen.

Bei manchen Ausführungsformen ist die wenigstens eine Empfangseinrichtungen für stochastische Ereignisse für den ständigen Empfang von stochastischen Ereignissen ausgelegt. Außerdem ist bei manchen Ausführungsformen die wenigstens eine Empfangseinrichtung über die (Programmierbaren) Logikschaltungen mit der wenigstens einen Sendeeinrichtung für stochastische Ereignisse gekoppelt bzw. verbunden. Die Logikschaltungen schalten bei manchen Ausführungsformen beim Empfang eines stochastischen Ereignisses die zugeordnete Sendeeinrichtung sofort in den Zustand "kein Ereignis", wenn die Sendeeinrichtung auf der Seite der Empfangseinrichtung gleichzeitig einen Einzelimpuls gesendet hat und folglich eine Kollision zwischen dem von der Empfangseinrichtung empfangenen und dem von der Sendeeinrichtung gesendeten Einzelimpuls vorliegen kann.

Bei manchen Ausführungsformen ist die Vorrichtung gemäß dem Standard IEEE802.3 und/oder IEEE802.3at ausgebildet. Außerdem sind bei manchen Ausführungsformen nach den obigen Standards unbenutzte Leiterpaare eines Cat.5-Datenkabels der genormten Übertragungsstrecke für die Übermittlung der stochastischen Ereignisse vorgesehen.

Bei manchen Ausführungsformen weist die Vorrichtung wenigstens einen Sendetransformator und wenigstens einen Empfangstransformator auf. Für Gleichspannungs-Übertragungen sind zur Energieversorgung der Empfängerseite über Mittelabgriffe der Sendetransformatoren und der Empfangstransformatoren über alle vier Leiterpaare des Cat.5-Datenkabels geführt. Außerdem sind bei manchen Ausführungsformen keine Gleichrichterbrücken für eine Polaritätskorrektur auf der Empfängerseite vorgesehen.

Bei manchen Ausführungsformen weist eine Funkenerosionsmaschine eine Vorrichtung auf, die wenigstens teilweise wie oben beschrieben ausgestaltet ist, bzw. bei manchen Ausführungsformen ist die Funkenerosionsmaschine (zusätzlich) dazu ausgelegt, die oben beschriebenen Verfahren wenigstens teilweise auszuführen.

Die Funkerosionsmaschine weist dabei die dem Fachmann bekannten Teile einer Funkenerosionsmaschine auf. Außerdem weist die Funkenerosionsmaschine einen zentralen Knoten auf, mehrere Module, die zur Steuerung der Funkenerosionsmaschine ausgelegt und vorgesehen sind, und wenigstens ein Datenkabel, wie oben beschrieben, das wenigstens ein Modul mit dem zentralen Knoten verbindet

Bei manchen Ausführungsformen repräsentieren, wie oben ausgeführt, die stochastischen Ereignisse Zustände (z.B. Discharge, Short, Open) einer Funkenstrecke und/oder die Sollwert- und Istwertübertragung für eine Antriebsachse der Funkenerosionsmaschine in Form von Weginkrementen (Forward, Backward, Stop).

### Anwendungsgebiet:

Die beschriebenen Verfahren und Vorrichtungen eignen sich besonders für die hochdynamische Übertragung von stochastisch auftretenden Ereignissen, über die kurzen Distanzen von weniger als etwa 10m, in Werkzeugmaschinen, insbesondere Funkenerosionsmaschinen, oder ähnlichen elektronischen Systemen, ohne allerdings darauf beschränkt zu sein.

Das Hauptanwendungsfeld ist somit im Werkzeugmaschinenbau und ähnlichen, räumlich begrenzten, elektronischen Systemen zu sehen.

## Patentansprüche

1. Verfahren zur digitalen Datenübertragung von stochastischen Ereignissen in einer Werkzeugmaschine über ein Datenkabel (6, LINK) mit mehreren verdrillten Leiterpaaren (UP_LINK, DOWN_LINK), wovon mindestens ein Leiterpaar für einen seriellen Datentransfer vorgesehen ist, **dadurch gekennzeichnet, dass** mindestens ein weiteres Leiterpaar (A_LINK, B_LINK) zur Übermittlung von stochastischen Ereignissen vorgesehen wird, und dass ein stochastisches Ereignis durch einen taktfrei übermittelten Einzelimpuls (30) signalisiert wird, wobei der Einzelimpuls ein positiver Impuls oder ein negativer Impuls sein kann, und wobei ein positiver Impuls ein erstes stochastisches Ereignis, ein negativer Impuls ein zweites stochastisches Ereignis und das Fehlen eines Einzelimpulses kein Ereignis signalisiert.

2. Verfahren nach Anspruch 1, bei dem auf einen ersten Einzelimpuls direkt ein zweiter Einzelimpuls mit zum ersten Einzelimpuls entgegengesetzter Polarität gesendet wird.

3. Verfahren nach Anspruch 1 oder 2, bei dem die Übermittlung von stochastischen Ereignissen für beide Richtungen über ein Leiterpaar (A_LINK, B_LINK), oder getrennt über zwei Leiterpaare (A_LINK, B_LINK) erfolgt, und dass eine Betriebsart und/oder eine Ereignisart dynamisch über den normalen, seriellen, bidirektionalen Datentransfer festgelegt wird.

4. Verfahren nach einem der Ansprüche 1 bis 3, bei dem beim Empfang des Einzelimpulses (30) durch Überprüfung einer Amplitude und einer Dauer des Einzelimpulses die Signalintegrität verifiziert wird, und nach positivem Befund das Ereignis verarbeitet wird, und durch einen zurückgesendeten Einzelimpuls (32) bestätigt wird, und dass bei negativem Befund das Ereignis nicht verarbeitet wird und keine Bestätigung gesendet wird, aber der Übertragungsfehler statistisch erfasst wird.

5. Verfahren nach einem der Ansprüche 1 bis 3, bei dem beim Empfang des Einzelimpulses (30) das Ereignis sofort verarbeitet wird, und erst anschließend durch Überprüfung einer Amplitude und einer Dauer eines ersten und/oder eines zweiten Einzelimpulses die Signalintegrität verifiziert wird, und bei positivem Befund durch einen zurückgesendeten Einzelimpuls (32) bestätigt wird, und bei negativem Befund keine Bestätigung gesendet wird und die Verarbeitung des Ereignisses rückgängig gemacht oder korrigiert und/oder der Fehler statistisch erfasst wird.

6. Verfahren nach einem der Ansprüche 1 bis 3, bei dem nur ein erster Einzelimpuls (34) vom Sender (22, 23) gesendet wird, und falls bei einer Verifizierung der Signalintegrität kein Übertragungsfehler festgestellt wird, ein zweiter Einzelimpuls (36) mit zum ersten Einzelimpuls (34) entgegengesetzter Polarität vom Empfänger (24, 25) als Empfangsbestätigung zurückgesendet wird, und, falls bei der Verifizierung der Signalintegrität ein Übertragungsfehler festgestellt wird, keine Empfangsbestätigung zurückgesendet wird, wobei der Sender (22, 23) nach Ablauf einer vorgegebenen Zeit, in der er nach Aussenden des ersten Einzelimpulses (34) keine Empfangsbestätigung detektiert hat, den zweiten Einzelimpuls (36) mit zum ersten Einzelimpuls (34) entgegengesetzter Polarität sendet, wobei der Übertragungsfehler statistisch erfasst wird.

7. Verfahren nach einem der Ansprüche 4 bis 6, bei dem beim Sender die durch die Signallaufzeit verursachte Lücke zwischen dem Ende des gesendeten Impulses (30) und dem Anfang des empfangenen Bestätigungsimpulses (32) ebenfalls gemessen wird, und als zusätzliches Kriterium für die Signalintegrität, und/oder als Maß für die Güte der Übertragungsstrecke für Diagnosezwecke ausgewertet wird.

8. Verfahren nach einem der Ansprüche 1 bis 7, bei dem Meldungen von stochastischen Ereignissen, welche über mehr als eine Station gesendet werden sollen, vom ersten Empfänger über eine Logikschaltung (11, FPGA_N) direkt auf den nächsten Sender umgeleitet werden.

9. Vorrichtung zur digitalen Datenübertragung von stochastischen Ereignissen in einer Werkzeugmaschine über ein Datenkabel (6) mit mehreren verdrillten Leiterpaaren, wovon mindestens ein Leiterpaar (UP_LINK, DOWN_LINK) für einen seriellen Datentransfer vorgesehen ist, **dadurch gekennzeichnet, dass** mindestens ein weiteres Leiterpaar (A_LINK, B_LINK) für die Übermittlung stochastischer Ereignisse vorgesehen ist, wobei wenigstens auf einer Seite des Datenkabels eine Sendeeinrichtung (22, 23) und auf einer gegenüberliegenden Seite des Datenkabels (6) eine Empfangseinrichtung (24, 25) vorgesehen und angekoppelt ist, welche an zugehörige Logikschaltungen (11, FPGA_N, 12, FPGA_M) angeschlossen sind, und die wenigstens eine Sendeeinrichtung (22, 23) für das Signalisieren stochastischer Ereignisse so ausgelegt ist, dass sie Einzelimpulse taktfrei übermittelt, wobei ein Einzelimpuls ein positiver Impuls oder ein negativer Impuls sein kann, und wobei ein positiver Impuls ein erstes stochastisches Ereignis, ein negativer Impuls ein zweites stochastisches Ereignis und das Fehlen eines Einzelimpulses kein Ereignis signalisiert, und die wenigstens eine Empfangseinrichtung (24, 25) für den Empfang der Einzelimpulse so ausgelegt ist, dass sie die drei Zustände "positiver Impuls", "negativer Impuls" und "kein Ereignis" detektieren kann.

10. Vorrichtung nach Anspruch 9, bei der die wenigstens eine Sendeeinrichtung (22, 23) über wenigstens einen Leitungs-Abschlusswiderstand (26, 27) mit den entsprechenden Leiterpaaren (A_LlNK, B_LINK) zur Übertragung stochastischer Ereignisse gekoppelt ist.

11. Vorrichtung nach Anspruch 9 oder 10, bei der auf jeder Seite des Datenkabels wenigstens eine Sendeeinrichtung (22, 23) und wenigstens eine Empfangseinrichtung (24, 25) für die Übermittlung stochastischer Ereignisse vorgesehen und angekoppelt ist, um eine bidirektionale Datenübertragung über das Datenkabel (6) zu ermöglichen, und die wenigstens eine Sendeeinrichtung (22, 23) und die wenigstens eine Empfangseinrichtung (24, 25) beidseits des Datenkabels (6) baugleich sind.

12. Vorrichtung nach Anspruch 11, bei der die wenigstens eine Empfangseinrichtung (24, 25) für stochastische Ereignisse für ständigen Empfang ausgelegt ist, und über die Logikschaltungen (11, FPGA_N, 12, FPGA_M) mit der wenigstens einen Sendeeinrichtung (22, 23) für stochastische Ereignisse verbunden ist, und die Logikschaltungen (11, FPGA_N, 12, FPGA_M) beim Empfang eines stochastischen Ereignisses die zugeordnete Sendeeinrichtung (22, 23) sofort in den Zustand "kein Ereignis" schaltet, wenn die Sendeeinrichtung (22, 23) auf der Seite der Empfangseinrichtung (24, 25) gleichzeitig einen Einzelimpulse gesendet hat und folglich eine Kollision zwischen dem von der Empfangseinrichtung (24, 25) empfangenen und dem von der Sendeeinrichtung (22, 23) gesendeten Einzelimpuls vorliegen kann.

13. Vorrichtung nach einem der Ansprüche 9 bis 12, wobei die Vorrichtung gemäß einem der Standards IEEE802.3 und IEEE802.3at ausgebildet ist, das Datenkabel (6) ein Cat.5-Datenkabel ist und unbenutzte Leiterpaare des Cat.5-Datenkabels der genormten Übertragungsstrecke für die Übermittlung der stochastischen Ereignisse vorgesehen sind.

14. Vorrichtung nach Anspruch 13, wobei die Vorrichtung wenigstens einen Sendetransformator (15) und wenigstens einen Empfangstransformator (19) aufweist, wobei Gleichspannungs-Übertragungen zur Energieversorgung der Empfängerseite über Mittelabgriffe (16, 18, 28, 29) des wenigstens einen Sendetransformators (15) und des wenigstens einen Empfangstransformators (19) über alle vier Leiterpaare des Cat.5-Datenkabels geführt sind, und keine Gleichrichterbrücken für eine Polaritätskorrektur auf der Empfängerseite vorgesehen sind.

15. Funkenerosionsmaschine, umfassend:
einen zentralen Knoten (5),
mehrere Module (2, 8), die zur Steuerung der Funkenerosionsmaschine vorgesehen und ausgelegt sind, und
wenigstens ein Datenkabel (6), das wenigstens ein Modul (2, 8) mit dem zentralen Knoten (5) verbindet, wobei die Funkenerosiönsmaschine eine Vorrichtung nach einem der vorhergehenden Ansprüche 9 bis 14 aufweist und/oder dazu eingerichtet ist, ein Verfahren nach einem der Ansprüche 1 bis 8 auszuführen.

16. Funkenerosionsmaschihe nach Anspruch 15, wobei die stochastischen Ereignisse Zustände (Discharge, Short, Open) einer Funkenstrecke repräsentieren und/oder für eine Antriebsachse der Funkenerosionsmaschine die Sollwert- und Istwertübertragung in Form von Weginkrementen (Forward, Backward, Stop) repräsentieren.

## Claims

1. Method for digital data transmission of stochastic events in a machine tool via a data cable (6, LINK) having a plurality of twisted conductor pairs (UP_LINK, DOWN_LINK), at least one conductor pair of which is intended for serial data transfer, **characterized in that** at least one further conductor pair (A_LINK, B_LINK) is intended to transmit stochastic events, and **in that** a stochastic event is signalled by an individual pulse (30) transmitted without a clock, the individual pulse being able to be a positive pulse or a negative pulse, and a positive pulse signalling a first stochastic event, a negative pulse signalling a second stochastic event and the absence of an individual pulse signalling no event.

2. Method according to Claim 1, in which, following a first individual pulse, a second individual pulse with a polarity opposite that of the first individual pulse is directly transmitted.

3. Method according to Claim 1 or 2, in which stochastic events are transmitted via one conductor pair (A_LINK, B_LINK) for both directions or separately via two conductor pairs (A_LINK, B_LINK), and in which an operating mode and/or a type of event is/are dynamically determined via the normal, serial, bidirectional data transfer.

4. Method according to one of Claims 1 to 3, in which, upon receiving the individual pulse (30), the signal integrity is verified by checking an amplitude and a duration of the individual pulse, and the event is processed following a positive result and is acknowledged by a returned individual pulse (32), and in which, in the event of a negative result, the event is not processed and no acknowledgement is transmitted but the transmission error is statistically detected.

5. Method according to one of Claims 1 to 3, in which, upon receiving the individual pulse (30), the event is immediately processed and the signal integrity is only then verified by checking an amplitude and a duration of a first individual pulse and/or a second individual pulse and, in the event of a positive result, is acknowledged by a returned individual pulse (32), and, in the event of a negative result, no acknowledgement is transmitted and the processing of the event is reversed or corrected and/or the error is statistically detected.

6. Method according to one of Claims 1 to 3, in which only a first individual pulse (34) is transmitted by the transmitter (22, 23), and, if no transmission error is determined when verifying the signal integrity, a second individual pulse (36) with a polarity opposite that of the first individual pulse (34) is returned by the receiver (24, 25) as an acknowledgement of receipt, and, if a transmission error is determined when verifying the signal integrity, no acknowledgement of receipt is returned, the transmitter (22, 23) transmitting the second individual pulse (36) with a polarity opposite that of the first individual pulse (34) after the expiry of a predefined time in which the transmitter has not detected an acknowledgement of receipt after emitting the first individual pulse (34), the transmission error being statistically detected.

7. Method according to one of Claims 4 to 6, in which the gap between the end of the transmitted pulse (30) and the start of the received acknowledgement pulse (32), which is caused by the signal propagation time, is likewise measured in the transmitter and is evaluated as an additional criterion for the signal integrity and/or as a measure of the quality of the transmission path for diagnostic purposes.

8. Method according to one of Claims 1 to 7, in which reports of stochastic events which are intended to be transmitted via more than one station are directly redirected to the next transmitter by the first receiver via a logic circuit (11, FPGA_N).

9. Apparatus for digital data transmission of stochastic events in a machine tool via a data cable (6) having a plurality of twisted conductor pairs, at least one conductor pair (UP LINK, DOWN_LINK) of which is intended for serial data transfer, **characterized in that** at least one further conductor pair (A_LINK, B_LINK) is intended to transmit stochastic events, a transmitting device (22, 23) being provided and coupled at least at one end of the data cable and a receiving device (24, 25) being provided and coupled at an opposite end of the data cable (6), which transmitting and receiving devices are connected to associated logic circuits (11, FPGA_N, 12, FPGA_M), and, for signalling stochastic events, the at least one transmitting device (22, 23) is designed in such a manner that it transmits individual pulses without a clock, an individual pulse being able to be a positive pulse or a negative pulse, and a positive pulse signalling a first stochastic event, a negative pulse signalling a second stochastic event and the absence of an individual pulse signalling no event, and the at least one receiving device (24, 25) for receiving the individual pulses is designed in such a manner that it can detect the three states "positive pulse", "negative pulse" and "no event".

10. Apparatus according to Claim 9, in which the at least one transmitting device (22, 23) is coupled to the corresponding conductor pairs (A_LINK, B_LINK) for transmitting stochastic events via at least one line terminating resistor (26, 27).

11. Apparatus according to Claim 9 or 10, in which at least one transmitting device (22, 23) and at least one receiving device (24, 25) for transmitting stochastic events are provided and coupled at each end of the data cable in order to allow bidirectional data transmission via the data cable (6), and the at least one transmitting device (22, 23) and the at least one receiving device (24, 25) are structurally identical at both ends of the data cable (6).

12. Apparatus according to Claim 11, in which the at least one receiving device (24, 25) for stochastic events is designed for continuous reception and is connected to the at least one transmitting device (22, 23) for stochastic events via the logic circuits (11, FPGA_N, 12, FPGA_M), and, upon receiving a stochastic event, the logic circuits (11, FPGA_N, 12, FPGA_M) immediately switch the associated transmitting device (22, 23) to the "no event" state if the transmitting device (22, 23) on the side of the receiving device (24, 25) has simultaneously transmitted an individual pulse and consequently there may be a collision between the individual pulse received by the receiving device (24, 25) and the individual pulse transmitted by the transmitting device (22, 23).

13. Apparatus according to one of Claims 9 to 12, the apparatus being designed according to either of the IEEE802.3 and IEEE802.3at standards, the data cable (6) being a Cat. 5 data cable, and unused conductor pairs of the Cat. 5 data cable of the standardized transmission path being intended to transmit the stochastic events.

14. Apparatus according to Claim 13, the apparatus having at least one transmitting transformer (15) and at least one receiving transformer (19), DC voltage transmission operations for supplying power to the receiver side via centre taps (16, 18, 28, 29) of the at least one transmitting transformer (15) and of the at least one receiving transformer (19) being conducted via all four conductor pairs of the Cat. 5 data cable, and no rectifier bridges being provided on the receiver side for polarity correction.

15. Electrical discharge machine comprising:
a central node (5),
a plurality of modules (2, 8) which are intended and designed to control the electrical discharge machine, and
at least one data cable (6) which connects at least one module (2, 8) to the central node (5), the electrical discharge machine having an apparatus according to one of the preceding Claims 9 to 14 and/or being set up to carry out a method according to one of Claims 1 to 8.

16. Electrical discharge machine according to Claim 15, the stochastic events representing states (Discharge, Short, Open) of a spark gap and/or representing the desired value and actual value transmission in the form of travel increments (Forward, Backward, Stop) for a drive shaft of the electrical discharge machine.

## Revendications

1. Procédé de transmission de données numériques d'événements stochastiques dans une machine-outil par l'intermédiaire d'un câble de données (6, LINK) comportant de multiples paires de conducteurs torsadées (UP_LINK, DOWN_LINK), parmi lesquelles il est prévu au moins une paire de conducteurs pour le transfert de données série, **caractérisé en ce qu'**au moins une autre paire de conducteurs (A_LINK, B_LINK) est prévue pour la transmission d'événements stochastiques, et **en ce qu'**un événement stochastique est signalisé par une impulsion unique transmise sans horloge (30), dans lequel l'impulsion unique peut être une impulsion positive ou une impulsion négative, et dans lequel une impulsion positive signalise un premier événement stochastique, une impulsion négative signalise un second événement stochastique et l'absence de d'impulsion unique signalise l'absence d'événement.

2. Procédé selon la revendication 1, dans lequel, lors d'une première impulsion non unique, une seconde impulsion unique de polarité opposée à la première impulsion unique est directement émise.

3. Procédé selon la revendication 1 ou 2, dans lequel la transmission d'événements stochastiques s'effectue dans les deux directions par l'intermédiaire d'une paire de conducteurs (A_LINK, B_LINK), ou séparément par l'intermédiaire de deux paires de conducteurs (A_LINK, B_LINK), et dans lequel un mode de fonctionnement et/ou un type d'événement est établi dynamiquement par l'intermédiaire du transfert de données série normal bidirectionnel.

4. Procédé selon l'une quelconque des revendications 1 à 3, dans lequel, lors de la réception de l'impulsion unique (30) l'intégrité du signal est vérifiée par vérification d'une amplitude et d'une durée de l'impulsion unique, et, après un résultat positif, l'événement est traité, et est confirmé par le renvoi d'une impulsion unique (32), et dans lequel, lors d'un résultat négatif, l'événement n'est pas traité et aucune confirmation n'est pas émise, mais l'erreur de transmission est évaluée statistiquement.

5. Procédé selon l'une quelconque des revendications 1 à 3, dans lequel, lors de la réception de l'impulsion unique (30), l'événement est traité immédiatement, et seulement ensuite l'intégrité du signal est vérifiée par vérification d'une amplitude et d'une durée d'une première et/ou d'une seconde impulsion unique et, lors d'un résultat positif, est confirmée par renvoi d'une impulsion unique (32), et dans lequel, lors d'un résultat négatif, aucune confirmation n'est émise et le traitement de l'événement est annulé ou corrigé et/ou l'erreur est évaluée statistiquement.

6. Procédé selon l'une quelconque des revendications 1 à 3, dans lequel une seule première impulsion unique (34) est émise par l'émetteur (22, 23), et si, lors de la vérification de l'intégrité du signal, aucune erreur de transmission n'est détectée, une seconde impulsion unique (36) ayant une polarité opposée à la première impulsion unique (34) est renvoyée par le récepteur (24, 25) en tant que confirmation de la réception, et, si, lors de la vérification de l'intégrité du signal, une erreur de transmission est détectée, aucune confirmation de réception n'est renvoyée, dans lequel l'émetteur (22, 23), après qu'un temps prédéterminé se soit écoulé au cours duquel il n'a détecté aucune confirmation de réception après l'émission de la première impulsion unique (34), émet la seconde impulsion unique (36) ayant une polarité opposée à la première impulsion unique (34), dans lequel l'erreur de transmission est évaluée statistiquement.

7. Procédé selon l'une quelconque des revendications 4 à 6, dans lequel l'écart provoqué par le temps de propagation du signal entre la fin de l'impulsion émise (30) et la réception de l'impulsion de confirmation reçue (32) est également mesuré dans l'émetteur, et est analysé en tant que critère supplémentaire pour l'intégrité du signal, et/ou en tant que mesure de la qualité du trajet de transmission à des fins de diagnostic.

8. Procédé selon l'une quelconque des revendications 1 à 7, dans lequel des messages d'événements stochastiques qui doivent être émis par l'intermédiaire de plus d'une station, sont directement redirigés du premier récepteur par l'intermédiaire d'un circuit logique (11, FPGA_N) vers l'émetteur suivant.

9. Dispositif de transmission de données numériques d'événements stochastiques dans une machine-outil par l'intermédiaire d'un câble de données (6) comportant de multiples paires de conducteurs torsadées, parmi lesquelles il est prévu au moins une paire de conducteurs (UP__LINK, DOWN_LINK) pour un transfert de données série, **caractérisé en ce qu'**au moins une autre paire de conducteurs (A_LINK, B_LINK) est prévue pour la transmission d'événements stochastiques, dans lequel il est prévu et couplé au moins un dispositif d'émission (22, 23) d'un côté du câble de données et un dispositif de réception (24, 25) d'un côté opposé du câble de données (6), qui sont reliés à un circuit logique (11, FPGA_N, 12, FPGA_M) associés, et l'au moins un dispositif d'émission (22, 23) est configuré pour la signalisation d'événements stochastiques de manière à ce qu'il transmette des impulsions uniques sans horloge, dans lequel une impulsion unique peut être une impulsion positive ou une impulsion négative, et dans lequel une impulsion positive signalise un premier événement stochastique, une impulsion négative signalise un second événement stochastique et l'absence d'impulsion unique signalise l'absence d'événement, et l'au moins un dispositif de réception (24, 25) est configuré pour la réception de l'impulsion unique de manière à ce qu'il puisse détecter les trois états "d'impulsion positive", "d'impulsion négative", et "d'absence d'impulsion".

10. Dispositif selon la revendication 9, dans lequel l'au moins un dispositif d'émission (22, 23) est couplé par l'intermédiaire d'au moins une résistance de terminaison de ligne (26, 27) à la paire de conducteurs correspondante (A_LINK, B_LINK) pour transmettre des événements stochastiques.

11. Dispositif selon la revendication 9 ou 10, dans lequel, de chaque côté du câble de données, il est prévu et couplé au moins un dispositif d'émission (22, 23) et au moins un dispositif de réception (24, 25) pour la transmission d'événements stochastiques afin de permettre une transmission de données bidirectionnelle par l'intermédiaire du câble de données (6), et l'au moins un dispositif d'émission (22, 23) et l'au moins un dispositif de réception (24, 25) ont des structures identiques des deux côtés du câble de données (6).

12. Dispositif selon la revendication 11, dans lequel l'au moins un dispositif de réception (24, 25) destiné à des événements stochastiques est configuré pour une réception permanente, et est connecté par l'intermédiaire des circuits logiques (11, FPGA N, 12, FPGA_M) à l'au moins un dispositif d'émission (22, 23) destiné à des événements stochastiques, et les circuits logiques (11, FPGA_N, 12, FPGA_M), lors de la réception d'un événement stochastique, fait immédiatement passer le dispositif d'émission associé (22, 23) à l'état "d'absence d'événement" lorsque le dispositif d'émission (22, 23) a émis simultanément une impulsion unique du côté du dispositif de réception (24, 25) et par conséquent, lorsqu'une collision entre l'impulsion unique reçue par le dispositif de réception (24, 25) et l'impulsion unique émise par le dispositif d'émission (22, 23) peut être présente.

13. Dispositif selon l'une quelconque des revendications 9 à 12, dans lequel le dispositif est conçu conformément à l'une des normes IEEE802.3 et IEEE802.3at, le câble de données (6) est un câble de données de catégorie 5 et les paires de conducteurs non utilisés du câble de catégorie 5 du trajet de transmission normalisé sont prévus pour la transmission des événements stochastiques.

14. Dispositif selon la revendication 13, dans lequel le dispositif comporte au moins un transformateur d'émission (15) et au moins un transformateur de réception (19), dans lequel des transmissions de tensions continues destinées à l'alimentation en énergie du côté récepteur par l'intermédiaire de prises intermédiaires (16, 18, 28, 29) de l'au moins un transformateur d'émission (15) et de l'au moins un transformateur de réception (19) sont acheminées par l'intermédiaire de la totalité des quatre paires de conducteurs du câble de données de catégorie 5, et aucun pont redresseur n'est prévu pour une correction de polarité du côté récepteur.

15. Aléseuse à électroérosion comprenant :
un noeud central (5),
de multiples modules (2, 8) qui sont prévus et configurés pour commander l'aléseuse à électroérosion, et
au moins un câble de données (6) qui connecte l'au moins un module (2, 8) au noeud central (5), dans laquelle l'aléseuse à électroérosion comporte un dispositif selon l'une quelconque des revendications 9 à 14 précédentes et/ou est conçue pour mettre en oeuvre un procédé selon l'une quelconque des revendications 1 à 8.

16. Aléseuse à électroérosion selon la revendication 15, dans laquelle les événements stochastiques représentent des états (décharge, court-circuit, circuit ouvert) d'un éclateur et/ou représentent la transmission nominale ou effective pour un axe d'entraînement de l'aléseuse à électroérosion sous la forme d'incréments de trajets (avant, arrière, arrêt).
